# EUROPEAN PATENT SPECIFICATION

(11) **EP 0 496 638 B1**
(45) Date of publication and mention of the grant of the patent: **14.10.1998**
(21) Application number: 92300635.7
(22) Date of filing: 24.01.1992
(51) Int. Cl.: C08K 5/00, C08L 71/02

(54) **Stabilized polyoxymethylene resin composition**
Stabilisierte Polyoxymethylenharz-Zusammensetzung
Composition stabilisée de résine polyoxyméthylène

(30) Priority: 24.01.1991 JP 7132/91; 21.02.1991 JP 27229/91; 25.02.1991 JP 29966/91
(43) Date of publication of application: 29.07.1992
(73) Proprietor: POLYPLASTICS CO. LTD., Chuo-Ku Osaka-shi Osaka 541 (JP)
(72) Inventor: Murao, Toshiro, Fuji-shi, Shizuoka (JP); Yamamoto, Kaoru, Fuji-shi, Shizuoka (JP); Kanaka, Keiichi, Fuji-shi, Shizuoka (JP); Kusatani, Mitsuharu, Ihara-gun, Shizuoka (JP)
(74) Representative: Jackson, Peter

(56) References cited:
- DE-A- 3 148 768

## Description

### [Field of the Invention]

The present invention relates to a polyoxymethylene resin and its composition having an excellent heat stability.

### [Description of the Related Art]

A polyoxymethylene resin has been widely used as a representative engineering plastic in electronic and electrical components, automobile parts and other mechanical parts by virtue of its excellent balance among various properties and excellent workability. With an expansion and an increase in the versatility of the applications, however, there is an ever-increasing demand for a higher quality of the resin. Examples of the properties to be improved of the polyoxymethylene resin include a lowering in the mechanical strength inevitably occurring in the step of extrusion or molding, the occurrence of a deposit on a mold, etc. (mold deposit), a lowering in the mechanical properties after being exposed to high-temperature conditions for a long period of time (heat aging) and a limitation of the coloring of a molded article to a lower level. One of the factors causative of these phenomena is the decomposition of a polymer during heating.

Polyoxymethylene is inherently liable to decomposition in a high-temperature oxidizing atmosphere under an acidic or alkaline condition from the viewpoint of its chemical structure. A chemically active terminal can be stabilized by a method wherein the terminal of a polymer is esterified by acetylation or the like (when the polymer is a homopolymer) or a method which comprises copolymerizing trioxane with a monomer having an adjacent carbon bond, such as a cyclicether or a cyclic formal, and removing an unstable terminal through decomposition to make the terminal stable (when the polymer is a copolymer). However, the cleavage of the main chain of the polymer also occurs by heating and it cannot be prevented by the above-described treatment alone, so that it is indispensable to add an antioxidant and other stabilizer to the composition from the practical point of view.

However, the polyoxymethylene composition containing a stabilizer is not always satisfactory in the complete prevention of the decomposition of the polymer. In fact, this composition undergoes an action of heat or oxygen within a cylinder of a molding machine and evolves formaldehyde due to the cleavage of the main chain or from the terminal which has not been sufficiently stabilized. This deteriorates a working environment during extrusion molding. Further, when molding is conducted for a long period of time, finely ground matter or tarry matter deposits on the surface of the mold (mold deposit), which is one of the most probable factors causative of the deterioration of the surface state of the molded article. Further, the decomposition of the polymer brings about a lowering in the mechanical strength and coloring of the resin. The cleavage of the main chain caused by heating a molded article for a long period of time (heat aging) is also causative of a lowering in the mechanical strength, coloring, etc. Under these circumstances, an effort has been continued with a view to developing the formulation of a more effective stabilizer.

In the polyoxymethylene resin, a phenolic compound having a sterically hindering group (a hindered phenol) or an amine compound having a sterically hindering group (a hindered amine) is used as the antioxidant, and compounds such as a polyamide, a urea derivative, an amidine compound, or a hydroxide or an organic or inorganic acid salt of an alkali or alkaline earth metal are used in combination as a stabilizer.

The hindered phenol is particularly effective as the antioxidant. Since, however, phenol is not only a weak acid itself but also functions as a strong acid upon absorption of light, an increase in the amount of addition of the hindered phenol often causes it to act as a polymer decomposition catalyst. Further, the oxidized derivative thereof is also liable to cause coloring. Further, the phenol itself sometimes brings about mold deposit during molding. Thus, since the phenol not only serves as a stabilizer but also causes the decomposition of the polymer during molding or heat aging or under the irradiation with light, skillful formulation is necessary for providing a stabilizer capable of offering a good balance among molding stability, heat stability, heat aging stability and weather resistance, so that no satisfactory results have hitherto been attained despite various proposals and measures.

### [Summary of the Invention]

An object of the present invention is to improve the stability of polyoxymethylene.

The present inventors have searched for a stabilizer for polyoxymethylene capable of solving the above-described problems and exhibiting a better effect and, as a result, have found that a series of particular compounds containing phenoxy units in their structures have the effect of stabilizing polyoxymethylene, which has led to the completion of the present invention.

Accordingly, the present invention provides a polyoxymethylene resin composition comprising a polyoxymethylene resin and 0.01 to 5% by weight, based on the polyoxymethylene resin, of a compound selected from the group consisting of the compounds represented by the general formulas (I) to (III):

Y¹-O-Ar¹-X¹-Ar²-O-Y² (I)

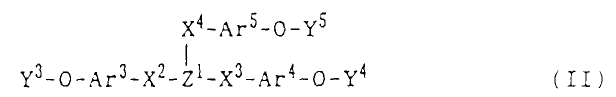

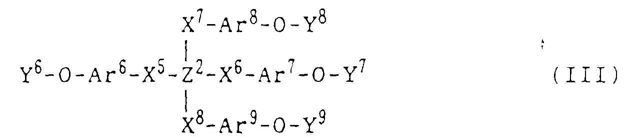

wherein
X¹ to X⁸ stand for at least one divalent atomic group selected from among -CₚH₂ₚ-, -CₚH₂ₚOC_{q}H_{2q}-, -CₚH₂ₚSC_{q}H_{2q}-, -CₚH₂ₚN(CᵣH₂ᵣ₊₁)C_{q}H_{2q}-, -CₚH₂ₚCOC_{q}H_{2q}-, -CₚH₂ₚCOOC_{q}H_{2q}-, -CₚH₂ₚCON(CᵣH₂ᵣ₊₁)C_{q}H_{2q}-, -CₚH₂ₚS(=O)₂C_{q}H_{2q}-, -CₚH₂ₚP(=O)(R)C_{q}H_{2q}-, -CₚH₂ₚP(=O)(R)OC_{q}H_{2q}- and -CₚH₂ₚOP(=O)(R)OC_{q}H_{2q}- (wherein p, q and r stand for each an integer of 0 to 20, R stands for a C₁ to C₂₀ alkyl or alkoxy group or a phenyl or phenoxy group) and may be the same or different,
Y¹ to Y⁹ stand for a monovalent atomic group selected from among -CₘH₂ₘ₊₁, -(CₘH₂ₘO)ₙCₚH₂ₚ₊₁, -CₘH₂ₘSCₚH₂ₚ₊₁,-CₘH₂ₘN(CₚH₂ₚ₊₁)(C_{q}H_{2q+1}),-CₘH₂ₘCOCₙH₂ₙ₊₁, -CₘH₂ₘCOOCₙH₂ₙ₊₁,-CₘH₂ₘOCOCₙH₂ₙ₊₁,-CₘH₂ₘCON(CₚH₂ₚ₊₁)(C_{q}H_{2q+1}),-CₘH₂ₘN(CₚH₂ₚ₊₁)COC_{q}H_{2q+1}, -CₘH₂ₘS(=O)₂CₙH₂ₙ₊₁, -CₘH₂ₘP(=O)(R)CₙH₂ₙ₊₁, -CₘH₂ₘP(=O)(R)OCₙH₂ₙ₊₁, -CₘH₂ₘOP(=O)(R)CₙH₂ₙ₊₁ and -CₘH₂ₘOP(=O)(R)OCₙH₂ₙ₊₁ (wherein m and n stand for each an integer of 1 to 20, p and q stand for each an integer of 0 to 20, R stands for a C₁ to C₂₀ alkyl or alkoxy group or a phenyl or phenoxy group and may be the same or different,
Z¹ is a trivalent group selected from among 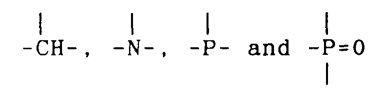 groups,
Z² is a tetravalent element selected from among 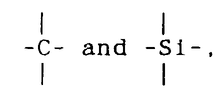 and
Ar¹ to Ar⁹ stand for an arylene group not having a directly bonded hydroxyl group and may be the same or different.

The resin composition further contains at least one member selected from the group consisting of a phenolic compound; a nitrogenous compound; a hydroxide, an inorganic acid salt and a carboxylic acid salt of an alkali metal; and a hydroxide, an inorganic acid salt and a carboxylic acid salt of an alkaline earth metal, preferably.

This composition can offer a better solution of the problems associated with the stability, such as the deterioration of the resin due to oxidation or thermal decomposition during extrusion or molding, the occurrence of mold deposit and the deterioration during heat aging.

### [Detailed Description of the Invention]

In the general formula (I), X¹ stands for at least one divalent atomic group selected from among -CₚH₂ₚ-, -CₚH₂ₚOC_{q}H_{2q}, -CₚH₂ₚSC_{q}H_{2q}-, CₚH₂ₚN(CᵣH₂ᵣ₊₁)C_{q}H_{2q}-, -CₚH₂ₚCOC_{q}H_{2q}-, CₚH₂ₚCOOC_{q}H_{2q}-, C₂H₂ₚCON(CᵣH₂ᵣ₊₁)C_{q}H_{2q}-, -CₚH₂ₚS(=O)₂C_{q}H_{2q}-, -CₚH₂ₚP(=O)(R)C_{q}H_{2q}-, -CₚH₂ₚP(=O)(R)OC_{q}H_{2q}- and -CₚH₂ₚOP(=O)(R)OC_{q}H_{2q}- (wherein p, q and r stand for each an integer of 0 to 20, R stands for a C₁ to C₂₀ alkyl or alkoxy group or a phenyl or phenoxy group). That is, X¹ may represent one of the above-described divalent atomic groups or in a combination of two or more of them. A particularly preferred divalent atomic group is one selected from among -CₚH₂ₚ-, -CₚH₂ₚOC_{q}H_{2q}-, -CₚH₂ₚSC_{q}H_{2q}-, -CₚH₂ₚN(CᵣH₂ᵣ₊₁)C_{q}H_{2q}-, -CₚH₂ₚCOC_{q}H_{2q}-, -CₚH₂ₚCOOC_{q}H_{2q}- and -CₚH₂ₚS(=O)₂C_{q}H_{2q}- (wherein p, q and r stand for each an integer of 0 to 20).

-OY¹ and -OY² in the general formula (I) stand for each a substituent other than a hydroxy group, that is, an alkoxy derivative group wherein Y¹ and Y² are represented by -CₘH₂ₘ₊₁, -(CₘH₂ₘO)ₙCₚH₂ₚ₊₁, -CₘH₂ₘSCₚH₂ₚ₊₁, -CₘH₂ₘN(CₚH₂ₚ₊₁)(C_{q}H_{2q+1}), -CₘH₂ₘCOCₙH₂ₙ₊₁, -CₘH₂ₘCOOCₙH₂ₙ₊₁, -CₘH₂ₘOCOCₙH₂ₙ₊₁, -CₘH₂ₘCON(CₚH₂ₚ₊₁)(C_{q}H_{2q+1}), -CₘH₂ₘN(CₚH₂ₚ₊₁)COC_{q}H_{2q+1}, -CₘH₂ₘS(=O)₂CₙH₂ₙ₊₁, -CₘH₂ₘP(=O)(R)CₙH₂ₙ₊₁, -CₘH₂ₘP(=O)(R)OCₙH₂ₙ₊₁, -CₘH₂ₘOP(=O)(R)CₙH₂ₙ₊₁ or -CₘH₂ₘOP(=O)(R)OCₙH₂ₙ₊₁ (wherein m and n stand for each an integer of 1 to 20, p and q stand for each an integer of 0 to 20, R stands for a C₁ to C₂₀ alkyl or alkoxy group or a phenyl or phenoxy group). Among them, the case that Y¹ and Y² each represents by an alkyl group such as -CₘH₂ₘ₊₁, or a hydroxyalkyl group and its condensate such as -(CₘH₂ₘO)ₙCₚH₂ₚ₊₁, is particularly preferred. Examples of the alkyl group include a straight-chain alkyl group, isopropyl group, isobutyl group, sec-butyl group and tert-butyl group; examples of the hydroxyalkyl group include hydroxyethyl group, hydroxypropyl group, hydroxybutyl group, 3-hydroxy-2-methylpropyl group, 2-hydroxy-2-methylpropyl group, hydroxypentyl group and 3-hydroxy-2,2-dimethylpropyl group; and examples of the condensate of the hydroxyalkyl group include polycondensates of ethylene glycol, propylene glycol, trimethylene glycol and tetramethylene glycol. Also, an alkyl ester represented by the formula -CₘH₂ₘCOOCₙH₂ₙ₊₁ or -CₘH₂ₘOCOCₙH₂ₙ₊₁ and an alkylamine represented by the formula -CₘH₂ₘN(CₚH₂ₚ₊₁)(C_{q}H_{2q+1}) are preferred as Y¹ and Y².

In the general formula (I), Ar¹ and Ar² stand for each a divalent arylene group, such as a phenylene group and a naphthylene group, particularly preferably a phenylene group, and may be one having no substituent except for -X- and -OY¹ or -OY². Alternatively, the Ar¹ and Ar² may have each a substituent in addition to -X- and -OY¹ or -OY², that is, a substituent selected from among -CₘH₂ₘ₊₁, -(CₘH₂ₘO)ₙCₚH₂ₚ₊₁, -CₘH₂ₘSCₚH₂ₚ₊₁, -CₘH₂ₘCOCₙH₂ₙ₊₁, -CₘH₂ₘCOOCₙH₂ₙ₊₁, -CₘH₂ₘOCOCₙH₂ₙ₊₁, -CₘH₂ₘS(=O)₂CₙH₂ₙ₊₁, -CₘH₂ₘP(=O)(R)CₙH₂ₙ₊₁, -CₘH₂ₘP(=O)(R)OCₙH₂ₙ₊₁, -CₘH₂ₘOP(=O)(R)CₙH₂ₙ₊₁, -CₘH₂ₘOP(=O)(R)OCₙH₂ₙ₊₁, -CₘH₂ₘN(CₚH₂ₚ₊₁)(C_{q}H_{2q+1}), -CₘH₂ₘCON(CₚH₂ₚ₊₁)(C_{q}H_{2q+1}) and -CₘH₂ₘN(CₚH₂ₚ₊₁)COC_{q}H_{2q+1} (wherein m and n stand for each an integer of 1 to 20, p and q stand for each an integer of 0 to 20, R stands for a C₁ to C₂₀ alkyl or alkoxy group or a phenyl or phenoxy group) and a phenyl group. Among them, Ar¹ and Ar² each having no substituent or a substituent represented by the formula -CₘH₂ₘ₊₁, -(CₘH₂ₘO)ₙCₚH₂ₚ₊₁, -CₘH₂ₘCOOCₙH₂ₙ₊₁ or -CₘH₂ₘN(CₚH₂ₚ₊₁)(C_{q}H_{2q+1}) are preferred. The presence of these substituents is effective in enhancing the reactivity of the compound according to the present invention or improving the compatibility with the polyoxymethylene resin. These substituents may be introduced alone. Alternatively, a plurality of substituents which may be the same or different may be introduced. The position of the substituent may be any of the o-, m- and p-positions. The compounds represented by the general formula (I) exclude those wherein an -OH group is directly bonded to the arylene group described here.

In the general formula (II), X² to X⁴ each stands for at least one divalent atomic group selected from among -CₚH₂ₚ-, -CₚH₂ₚOC_{q}H_{2q}-, CₚH₂ₚSC_{q}H_{2q}-, -CₚH₂ₚN(CᵣH₂ᵣ₊₁)C_{q}H_{2q}-, -CₚH₂ₚCOC_{q}H_{2q}-, -CₚH₂ₚCOOC_{q}H_{2q}-, CₚH₂ₚCON(CᵣH₂ᵣ₊₁)C_{q}H_{2q}-, CₚH₂ₚS(=O)₂C_{q}H_{2q}-, -CₚH₂ₚP(=O)(R)C_{q}H_{2q}-, -CₚH₂ₚP(=O)(R)OC_{q}H_{2q}- and -CₚH₂ₚOP(=O)(R)OC_{q}H_{2q}- (wherein p, q and r stand for each an integer of 0 to 20, R stands for a C₁ to C₂₀ alkyl or alkoxy group or a phenyl or phenoxy group), independently. That is, X² to X⁴ each may represent one of the above-described divalent atomic groups or in a combination of two or more of them. The case that X² to X4 each stands for one divalent atomic group selected from among the divalent atomic groups described above is preferable. A particularly preferred divalent atomic group is one selected from among -CₚH₂ₚ-, -CₚH₂ₚOC_{q}H_{2q}-, - CₚH₂ₚSC_{q}H_{2q}-, -CₚH₂ₚCON(CᵣH₂ᵣ₊₁)C_{q}H_{2q}-,-CₚH₂ₚCOC_{q}H_{2q}-,-CₚH₂ₚCOOC_{q}H_{2q}- and -CₚH₂ₚS(=O)₂C_{q}H_{2q}- (wherein p, q and r stand for each an integer of 0 to 20).

-OY³ to -OY⁵ in the general formula (II) are the same as -OY¹ and -OY² in the general formula (I). Among them, the case that Y³ to Y⁵ each represents by an alkyl group such as -CₘH₂ₘ₊₁, or a hydroxyalkyl group and its condensate such as -(CₘH₂ₘO)ₙCₚH₂ₚ₊₁, is particularly preferred. Examples of the alkyl group, the hydroxyalkyl group and the condensate of the hydroxyalkyl group include those which described with respect to Y¹ and Y². Also, an alkyl ester represented by the formula -CₘH₂ₘCOOCₙH₂ₙ₊₁ or -CₘH₂ₘOCOCₙH₂ₙ₊₁ and an alkyl thioether represented by the formula -CₘH₂ₘSCₚH₂ₚ₊₁ are preferred as Y¹ to Y³.

In the general formula (II), Ar³ to Ar⁵ stand for each a divalent arylene group, such as a phenylene group and a naphthylene group. That is, Ar³ to Ar⁵ each has an aromatic ring, such as a benzene ring and a naphthalene ring in the chemical formula. As the aromatic ring, a benzene ring is particularly preferred. The aromatic ring may be one having no substituent other than -X²-, -X³-, -X⁴-, -OY³, -OY⁴ and -OY⁵, or one having a substituent such as -CₘH₂ₘ₊₁, -(CₘH₂ₘO)ₙCₚH₂ₚ₊₁, -CₘH₂ₘSCₚH₂ₚ₊₁, -CₘH₂ₘCOCₙH₂ₙ₊₁, -CₘH₂ₘCOOCₙH₂ₙ₊₁, -CₘH₂ₘOCOCₙH₂ₙ₊₁, -CₘH₂ₘS(=O)₂CₙH₂ₙ₊₁, -CₘH₂ₘN(CₚH₂ₚ₊₁)(C_{q}H_{2q+1}), -CₘH₂ₘCON(CₚH₂ₚ₊₁)(C_{q}H_{2q+1}), -CₘH₂ₘN(CₚH₂ₚ₊₁)COC_{q}H_{2q+1}, -CₘH₂ₘPR¹R², -CₘH₂ₘP(=O)R¹R², -CₘH₂ₘOPR¹R², -CₘH₂ₘOP(=O)R¹R² (wherein m and n stand for each an integer of 1 to 20, p and q stand for each an integer of 0 to 20, and R¹ and R² stand for each a C₁ to C₂₀ alkyl or alkoxy group or a phenyl or phenoxy group) and a phenyl group. The presence of these substituent in the aromatic ring is effective in enhancing the reactivity of the compound according to the present invention or improving the compatibility of the compound according to the present invention with the polyoxymethylene resin. One substituent or a plurality of substituents of the same kind or different from each other may be introduced. There is no particular limitation on the position of the substituents bonded to Ar³ to Ar⁵, that is, X² to X⁴, -OY³ to -OY⁵ and other substituents. However, the compounds represented by the general formula (II) exclude those wherein an -OH group is directly bonded to the aromatic ring described here.

X⁵ to X⁸ in the general formula (III) are the same as X² to X⁴ in the general formula (II). The case that X⁵ to X⁸ each stands for one divalent atomic group selected from among the divalent atomic groups described with respect to X² to X⁴ is preferable. A particularly preferred divalent atomic group is one selected from among -CₚH₂ₚ-, -CₚH₂ₚOC_{q}H_{2q}-, -CₚH₂ₚSC_{q}H_{2q}-, CₚH₂ₚCON(CᵣH₂ᵣ₊₁)C_{q}H_{2q}-, -CₚH₂ₚCOC_{q}H_{2q}- and -CₚH₂ₚCOOC_{q}H_{2q}- (wherein p, q and r stand for each an integer of 0 to 20).

-OY⁶ to -OY⁹ in the general formula (III) are the same as -OY¹ and -OY² in the general formula (I). The monovalent atomic groups preferred as Y⁶ to Y⁹ are the same ones preferred as Y¹ and Y².

In the general formula (III), Ar⁶ to Ar⁹ stand for each a divalent arylene group, such as a phenylene group and a naphthylene group. That is, Ar⁶ to Ar⁹ each has an aromatic ring, such as a benzene ring and a naphthalene ring in the chemical formula. As the aromatic ring, a benzene ring is particularly preferred. The aromatic ring may be one having no substituent other than -X⁵- to -X⁸- and -OY⁶ to -OY⁹, or one having a substituent such as -CₘH₂ₘ₊₁, -(CₘH₂ₘO)ₙCₚH₂ₚ₊₁, -CₘH₂ₘSCₚH₂ₚ₊₁, -CₘH₂ₘCOCₙH₂ₙ₊₁, -CₘH₂ₘCOOCₙH₂ₙ₊₁, -CₘH₂ₘOCOCₙH₂ₙ₊₁, -CₘH₂ₘS(=O)₂CₙH₂ₙ₊₁, -CₘH₂ₘN(CₚH₂ₚ₊₁)(C_{q}H_{2q}+1), -CₘH₂ₘCON(CₚH₂ₚ₊₁)(C_{q}H_{2q+1}), -CₘH₂ₘN(CₚH₂ₚ₊₁)COC_{q}H_{2q+1}, -CₘH₂ₘPR¹R², -CₘH₂ₘP(=O)R¹R², -CₘH₂ₘOPR¹R², -CₘH₂ₘOP(=O)R¹R² (wherein m and n stand for each an integer of 1 to 20, p and q stand for each an integer of 0 to 20, and R¹ and R² stand for each a C₁ to C₂₀ alkyl or alkoxy group or a phenyl or phenoxy group) and a phenyl group. The presence of these substituent in the aromatic ring is effective in enhancing the reactivity of the compound according to the present invention or improving the compatibility of the compound according to the present invention with the polyoxymethylene resin. One substituent or a plurality of substituents of the same kind or different from each other may be introduced. There is no particular limitation on the position of the substituents bonded to Ar⁶ to Ar⁹, that is, X⁵ to X⁸, -OY⁶ to -OY⁹ and other substituents. However, the compounds represented by the general formula (III) exclude those wherein an -OH group is directly bonded to the aromatic ring described here.

The compounds represented by the general formulas (I) to (III) are added in an amount of 0.01 to 5% by weight, preferably 0.1 to 2% by weight based on the polyoxymethylene resin. When the amount of addition of these compounds are excessively small, the stabilization effect is insufficient. On the other hand, when it is excessively large, rather the decomposition and discoloration of the resin are promoted in some cases unfavorably.

The polyoxymethylene to which the above-described additives are added is a polymeric compound mainly composed of oxymethylene groups as the constituent unit, and may be any of a polyoxymethylene homopolymer and a copolymer, a terpolymer and a block copolymer comprising a minor amount of constituent units other than the oxymethylene group. Further, the molecule may have not only a linear structure but also a branched or crosslinked structure. Further, there is no particular limitation also on the degree of polymerization as far as the resin is moldable.

Although the above-described compound has the effect of significantly stabilizing the polyoxymethylene even when it is used alone, it may be used in combination with at least one member selected from among a nitrogenous compound such as an amine or an amide; a metal containing compound such as a hydroxide, an inorganic acid salt, a carboxylic acid salt or an alkoxide of an alkali metal or an alkaline earth metal; a sterically hindered phenolic compound; etc..

Examples of the nitrogenous compound include homopolyamides and copolyamides, such as nylon 12, nylon 6.12 and nylon 6.66.610, substituted polyamides having a methylol group or the like, polyamides such as polyester amides synthesized from a combination of a nylon salt with caprolactam, thermal condensation products synthesized by heating from polyaminotriazole, dicarboxylic acid dihydrazide and urea, uracil, cyanoguanidine, dicyandiamide, guanamine(2,4-diamino-sym-triazine), melamine, N-butylmelamine, N-phenylmelamine, N,N-diphenylmelamine, N,N-diallylmelamine, N,N',N"-triphenylmelamine, N,N',N"-trimethylolmelamine, benzoguanamine, 2,4-diamino-6-methyl-sym-triazine, 2,4-diamino-6-butyl-sym-triazine, 2,4-diamino-6-benzyloxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine, 2,4-dioxy-6-amino-sym-triazine (ammelide), 2-oxy-4,6-diamino-sym-triazine (ammeline) and N,N,N',N'-tetracyanoethylbenzoguanamine. The nitrogenous compounds include also hindered amines which will be described hereinafter.

Examples of the metal containing compound include a hydroxide, a carbonate, a phosphate, a silicate, a borate, a carboxylate such as an oxalate, a malonate, a succinate or an adipate, a higher (C₁₀ - C₃₂) fatty acid salt, such as a stearate, and a substituted fatty acid salt having a substituent, such as a hydroxyl group, of sodium, potassium, magnesium, calcium, barium. Further, the metal containing compound may be a basic compound having in its molecule at least one tertiary nitrogen atom and metal carboxylate, and examples thereof include sodium N-methyliminodiacetate, trisodium nitrilotriacetate, tetrasodium ethylenediaminetetraacetate, dicalcium ethylenediaminetetraacetate, pentasodium triaminepentaacetate, pentapotassium diethylenepentaaceate, hexasodium triethylenetetraminehexaacetate, sodium ethyleneoxybis(ethylamine)-N,N,N'N'-tetraacetate.

The compounds represented by the formulas (I) to (III) according to the present invention exhibit a further improved heat stability, particularly a significant synergistic effect in the improvement in the heat aging properties, when used in combination with known antioxidants, that is, hindered phenols, hindered amines.

Examples of the hindered phenol antioxidant to be used in combination with the compounds represented by the formulas (I) to (III) for this purpose include 2,2'-methylenebis(4-methyl-6-tert-butylphenol), 1,6-hexanediol bis[3-(3,5-di-tert-butyl-4-hydroxyphenyl)-propionate], pentaerythritol tetrakis[3-(3,5-di-tert-butyl-4-hydroxyphenyl)propionate], triethylene glycol bis[3-(3-tert-butyl-5-methyl-4-hydroxyphehyl)-propionate] and N,N'-hexamethylenebis(3,5-di-tert-butyl-4-hydroxyhydrocinnamide).

The hindered amine compound is a piperidine derivative having a sterically hindering group, and examples thereof include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-methoxy-2,2,6,6-tetramethylpiperidine, 4-benzoyloxy-2,2,6,6-tetramethylpiperidine, 4-cyclohexyloxy -2,2,6,6-tetramethylpiperidine, 4-phenoxy-2,2,6,6-tetramethylpiperidine, 4-benzyloxy-2,2,6,6-tetramethylpiperidine, 4-(phenylcarbamoyloxy)-2,2,6,6-tetramethylpiperidine, bis(2,2,6,6-tetramethyl-4-piperidyl)oxalate, bis(2,2,6,6-tetramethyl-4-piperidyl)malonate, bis(2,2,6,6-tetramethyl-4-piperidyl)adipate and bis(2,2,6,6-tetramethyl-4-piperidyl)sebacate. Further, it is also possible to use high-molecular weight polycondensates of piperidine derivatives, for example, a polycondensate of dimethyl-1-(2-hydroxyethyl)-4-hydroxy-2,2,6,6-tetramethylpiperidine succinate.

In order to improve the moldability or impart desired properties according to the purpose, it is also possible to add to the composition of the present invention known additives commonly used in thermoplastic resins, for example, colorants such as dyes and pigments, lubricants, nucleating agents, releasing agents, antistatic agents and other surfactants, or organic polymer materials, inorganic or organic fibrous, particulate and flaky fillers. They may be used alone or in a combination of two or more of them.

There is no particular limitation on the method of preparing the composition of the present invention. For example, the individual components may be simply blended. Alternatively, the individual components may be mixed and melt-kneaded and extruded by means of an extruder to form pellets, which may be then molded. Further, use may be made of a method which comprises preparing pellets different from each other in the composition, mixing them in respective predetermined amounts and molding the mixture to give a molded article having an intended composition, or a method wherein at least one component is directly fed in a molding machine. Any of these methods may be used. Further, in order to homogeneously blend the additives, it is useful to use a method which comprises pulverizing part of the resin component to form a fine powder, mixing the fine powder with the other components, and adding the mixture to the resin.

The resin composition of the present invention can be molded by any of extrusion molding, injection molding, compression molding, vacuum molding, blow molding and foam molding.

As is apparent from the foregoing description and tho following Examples, the compound represented by the formulas (I) to (III), as such, does not contain any element as an acid and is less liable to be colored. Therefore, the incorporation of this compound in the polyoxymethylene resin composition is very excellent in the effect of suppressing the decomposition of the polymer during molding, preventing the evolution of decomposition gas, suppressing the lowering in the degree of polymerization and the accompanying lowering in the mechanical strength, suppressing the occurrence of mold deposit and preventing the coloration, and further useful also in the prevention of a lowering in the mechanical strength and coloration during heat aging, an improvement in the weather resistance, etc., so that it is possible to provide a polyoxymethylene resin or its composition having a well-balanced heat stability.

### [Examples]

The present invention will now be described in more detail with reference to the following Examples, though it is not limited to these Examples.

### (Examples 1 to 8 and Comparative Examples 1 and 2)

In Examples 1 to 8, 100 parts of a polyoxymethylene copolymer resin not containing any stabilizer was pulverized and each of compounds represented by the following formulas (A) to (H) was added in an amount of 0.3 part by weight to the powder and sufficiently stirred in a nitrogen atmosphere.

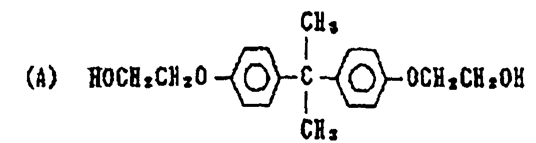

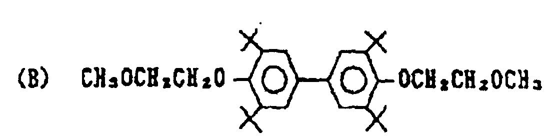

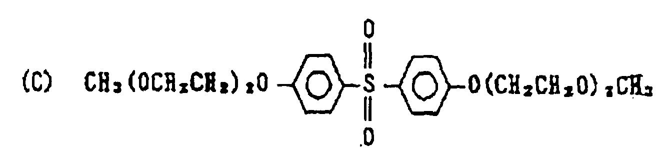

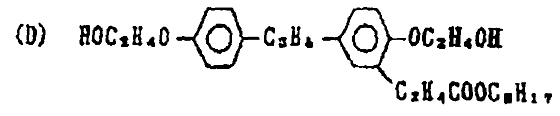

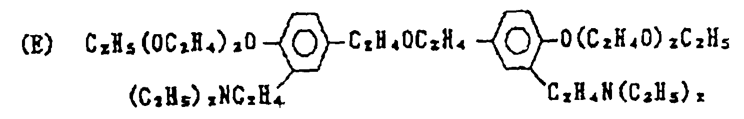

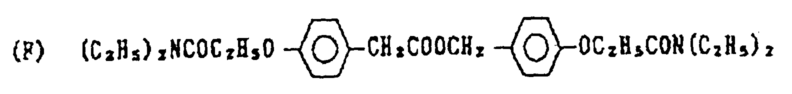

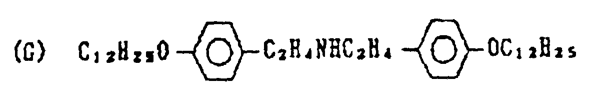

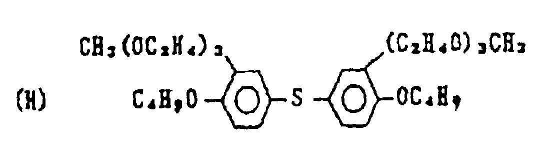

In order to evaluate the degree of cleavage of the polymer main chain in terms of a change in the melt viscosity accompanying a lowering in the molecular weight with time, 10 g of the mixture was put in a model MX101 melt indexer, manufactured by Takara Kogyo K.K., allowed to stay in a molten state at 210°C for a predetermined period of time, and passed through an orifice having an inner diameter of 2.09 mm while applying a load of 2.16 kg to measure the weight of an effluent resin per 10 min (in terms of MI value). The measurement was conducted after the elapse of 7 min, 30 min and 60 min, and an increase in the MI value after the elapse of 60 min [△MI = MI (60 min) - MI (7 min)] was determined.

For comparison, a polyoxymethylene copolymer resin not containing any additive, and a composition prepared by adding 0.3 part by weight of pentaerythrityl tetrakis[3-(3,5-di-tert-butyl-4-hydroxytphenyl)propionate] (Irganox 1010 manufactured by Ciba-Geigy Limited) as a representative known hindered phenol antioxidant to 100 parts by weight of a polyoxymethylene copolymer in the same manner as that described above were subjected to the measurement in the same manner as that described above (Comparative Examples 1 and 2).

The results are given in Table 1.

**[Table 1]**

| | Additive | MI | | | ΔMI |
|---|---|---|---|---|---|
| | | 7 min | 30 min | 60 min | |
| Ex. 1 | A | 13.0 | 13.3 | 13.6 | 0.6 |
| 2 | B | 12.8 | 13.0 | 13.5 | 0.7 |
| 3 | C | 13.5 | 13.5 | 13.4 | -0.1 |
| 4 | D | 12.9 | 13.2 | 13.7 | 0.8 |
| 5 | E | 12.5 | 12.8 | 13.4 | 0.9 |
| 6 | F | 12.5 | 12.8 | 13.5 | 1.0 |
| 7 | G | 13.6 | 14.0 | 14.9 | 1.3 |
| 8 | H | 13.6 | 13.9 | 14.3 | 0.7 |
| Comp. Ex. 1 | none | 13.4 | 14.3 | 15.7 | 2.3 |
| 2 | Irg. 1010 | 12.7 | 13.4 | 14.1 | 1.4 |

Same of the compositions exhibited an increase in the initial MI value when a phenoxy compound was added thereto. This may be due to the lubricating effect of the additive and occurs through a mechanism different from that of the decomposition of the polymer. An increase in the MI value of the composition after the elapse of 30 min was small, which suggests that the cleavage of the polymer chain is very efficiently suppressed. Also, an increase (△MI) after the elapse of 60 min was very small.

### (Examples 9 to 16 and Comparative Examples 3 and 4)

A polyoxymethylene copolymer was blended with the additives (A) to (H) according to the same formulation as that of the Examples 1 to 8, and the blends were melt-kneaded and extruded at 200°C by means of an extruder to form pellets. 8 g of each pellet was allowed to stay in a molten state at 200°C for 5 min in a melt indexer, and a load was applied to the melt so that the melt flowed out. The evolved formaldehyde was caught, and the amount thereof was determined by the acetylacetone method and expressed in terms of the weight (ppm) of the evolved formaldehyde per unit weight of the resin. For comparison, the same test was conducted on a composition wherein no addition was added (Comparative Example 3) and a composition wherein Irganox 1010 was similarly incorporated (Comparative Example 4).

Yellowness index (JIS K7103) was determined through the use of these pellets by allowing them to stay within an injection molding machine at a temperature of 200°C for one hr, forming sheetlike moldings having a size of 40 mm x 70 mm x 2 mm therefrom, and measuring the coloration accompanying the staying in a molten state with a model Z-1001DP color difference meter manufactured by Nippon Denshoku Co., Ltd.

Further, these pellets were injection-molded at a cylinder temperature of 200°C to form sheetlike moldings having a size of 40 mm x 70 mm x 2 mm and JIS K7113 No. 1 tensile test pieces (thickness: 3 mm). The moldings were allowed to stand at 140°C for 8 days (heat aging). Thereafter, the tensile test pieces were subjected to the measurement of the retention of tensile elongation, and the sheetlike moldings were subjected to the measurement of coloration (yellowness index).

The results are summarized in Table 2.

**[Table 2]**

| | Additive | Amt. of evolution of gas (ppm) | Yellowness Index | After heat aging | |
|---|---|---|---|---|---|
| | | | | retention of elongation (%) | yellowness index |
| Ex. 9 | A | 76 | 4.5 | 31 | 13.0 |
| 10 | B | 85 | 4.9 | 33 | 12.4 |
| 11 | C | 60 | 4.4 | 37 | 11.7 |
| 12 | D | 80 | 5.4 | 31 | 12.7 |
| 13 | E | 83 | 4.8 | 36 | 12.7 |
| 14 | F | 96 | 5.2 | 33 | 12.3 |
| 15 | G | 100 | 4.5 | 29 | 13.0 |
| 16 | H | 79 | 4.3 | 34 | 11.9 |
| Comp. Ex. 3 | none | 200 | 5.0 | 20 | cracking occurred |
| 4 | Irg. 1010 | 125 | 5.8 | 30 | 13.3 |

The compositions of the present invention (Examples) exhibited a significant reduction in the amount of evolution of formaldehyde, was very low in the coloration during the staying in a molten state, and exhibited the effect of improving the retention of elongation and preventing the coloration after the heat aging.

### (Examples 17 to 22 and Comparative Examples 5 to 8)

The compounds (A) or (B) was added in an amount of 0.1, 1 or 2 parts by weight to 100 parts by weight of a polyoxymethylene copolymer not containing any additive, and an evaluation was conducted in the same manner as that of the Examples 1 to 16. For comparison, compositions wherein 0.005 part by weight and 10 parts by weight of the respective compounds were added to 100 parts by weight of a polyoxymethylene copolymer resin were similarly evaluated. The results are given in Table 3.

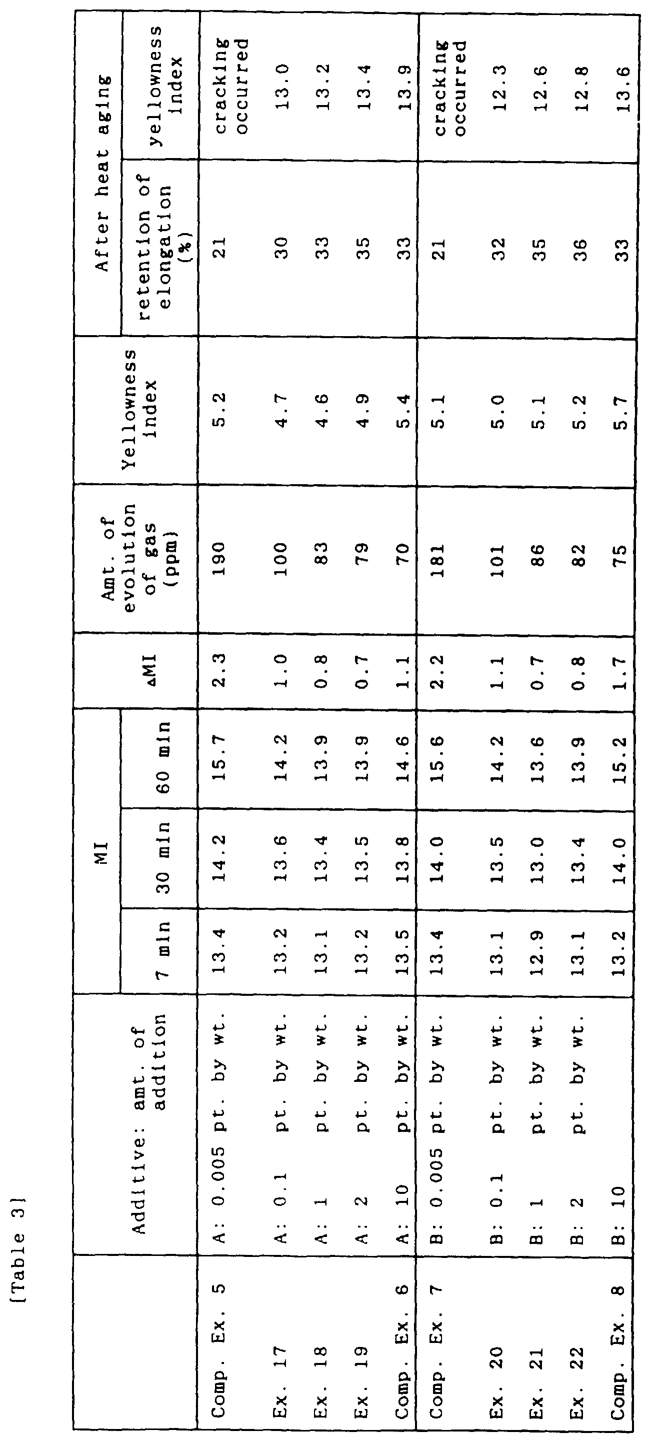

Favorable results were obtained when the amount of addition fell within the scope of the present invention. On the other hand, no sufficient effect could be attained on the prevention of the polymer decomposition and gas evolution and the retention of elongation when the amount of addition was 0.005 part by weight, and significant coloration occurred when the amount of addition was 10 parts by weight.

### (Examples 23 to 30 and Comparative Example 9)

0.3 part by weight of the compounds (A) to (H) described in the Examples 1 to 8 and 0.2 part by weight of melamine were added to 100 parts by weight of a polyoxymethylene copolymer resin not containing any additive, and the mixtures were evaluated in the same manner as that of the Examples 1 to 16. For comparison, a composition wherein 0.2 part by weight of melamine alone was similarly added was also similarly evaluated. The results are given in Table 4.

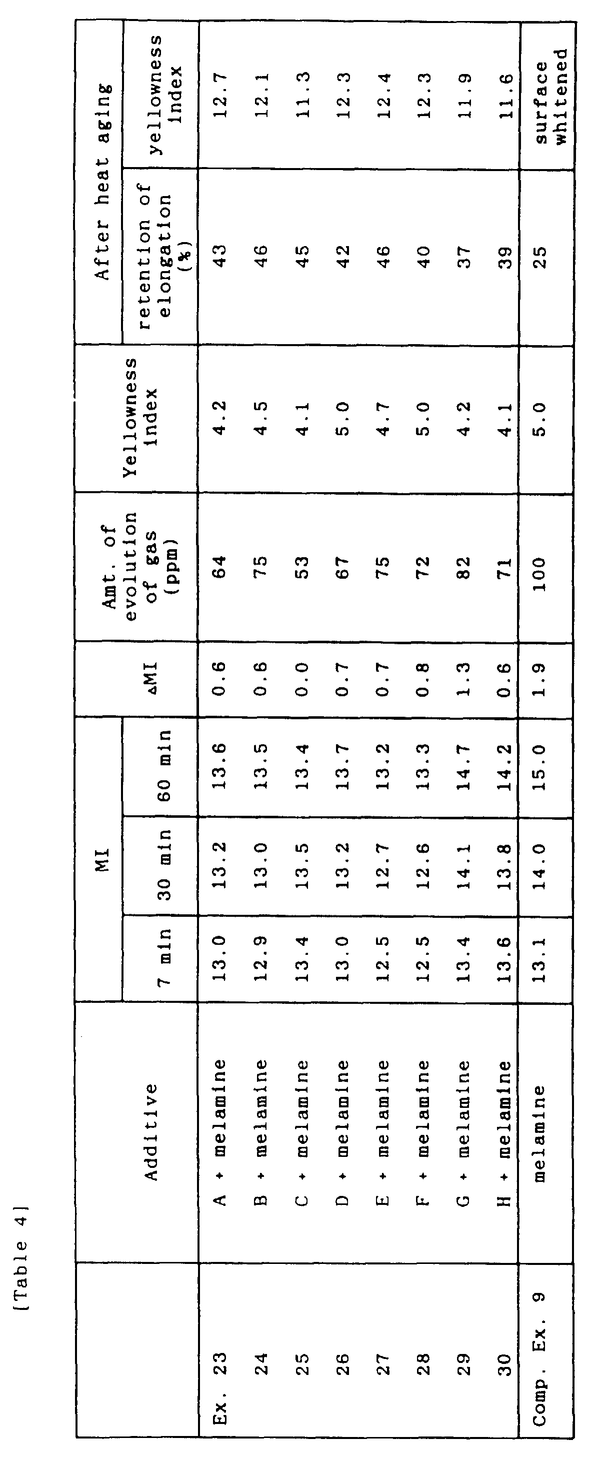

In this case as well, the compositions of the present invention exhibited a further improvement in the prevention of the evolution of formaldehyde gas, the retention of elongation after heat aging, etc.

### (Examples 31 to 38 and Comparative Examples 10 and 11)

Among the compounds described in the Examples 1 to 8, 0.2 part by weight of each of the compounds (A), (B), (C) or (D), 0.2 part by weight of Irganox 1010 as a phenol antioxidant or bis(2,2,6,6-tetramethyl-4-piperidyl)sebacate (Sanol LS-770 manufactured by Sankyo Co., Ltd.) as a hindered amine antioxidant and 0.2 part by weight of melamine were added to 100 parts by weight of a polyoxymethylene copolymer resin, and the mixtures were evaluated in the same manner as that of the Examples 1 to 6.

For comparison, a composition wherein 0.4 part by weight of Irganox 1010 and 0.2 part by weight of melamine were added (Comparative Example 10) and a composition wherein 0.4 part by weight of Sanol LS-770 and 0.2 part by weight of melamine were added (Comparative Example 11) were also evaluated in the same manner as that of the Examples. The results are summarized in Table 5.

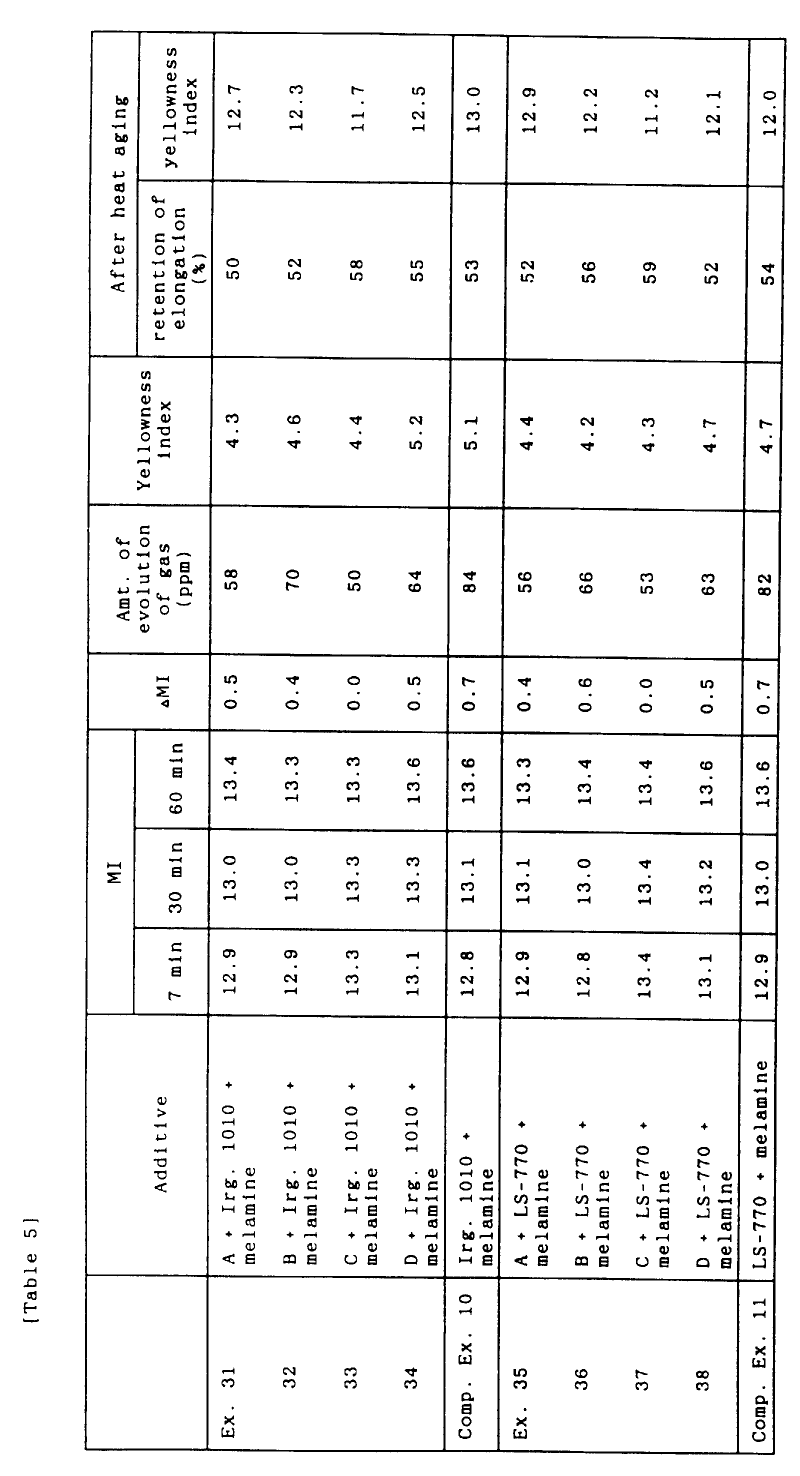

In this case as well, the compositions of the present invention exhibited a significant improvement in the retention of the elongation. On the other hand, when the compound according to the present invention was used in combination with the hindered phenol, although slight coloration was observed, the level of the coloration was lower than that in the case where the hindered phenol was added alone.

### (Examples 39 to 43 and Comparative Examples 12 and 13)

In Examples 39 to 43, 100 parts of a polyoxymethylene copolymer resin not containing any stabilizer was pulverized and each of compounds represented by the following formulas (I) to (M) was added in an amount of 0.3 part by weight to the powder and sufficiently stirred in a nitrogen atmosphere.

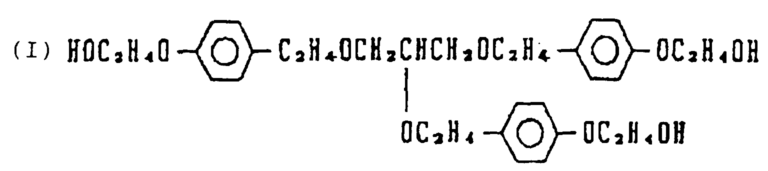

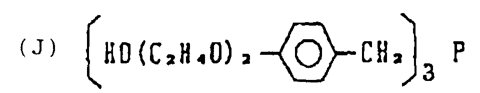

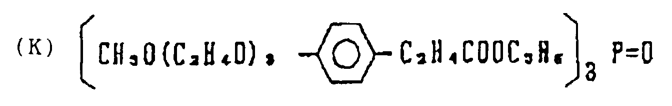

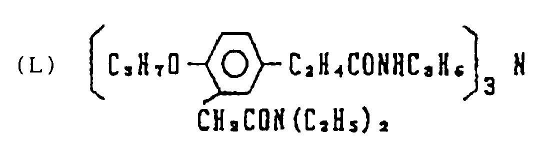

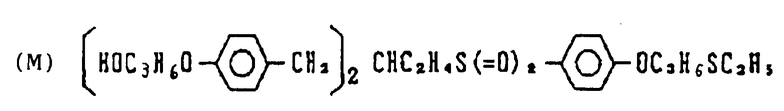

In order to evaluate the degree of cleavage of the polymer main chain in terms of a change in the melt viscosity accompanying a lowering in the molecular weight with time, 10 g of the mixture was put in a model MX101 malt indexer, manufactured by Takara Kogyo K.K., allowed to stay in a molten state at 210°C for a predetermined period of time, and passed through an orifice having an inner diameter of 2.09 mm while applying a load of 2.16 kg to measure the weight of an effluent resin per 10 min (in terms of MI value). The measurement was conducted after the elapse of 7 min, 30 min and 60 min, and an increase in the MI value after the elapse of 60 min [ΔMI = MI (60 min) - MI (7 min)] was determined.

For comparison, a polyoxymethylene copolymer resin not containing any additive, and a composition prepared by adding 0.3 part by weight of pentaerythrityl tetrakis[3-(3,5-di-tert-butyl-4-hydroxytphenyl)propionate] (Irganox 1010 manufactured by Ciba-Geigy Limited) as a representative known hindered phenol antioxidant to 100 parts by weight of a polyoxymethylene copolymer in the same manner as that described above were subjected to the measurement in the same manner as that described above (Comparative Examples 12 and 13).

The results are given in Table 6.

**[Table 6]**

| | Additive | MI | | | ΔMI |
|---|---|---|---|---|---|
| | | 7 min | 30 min | 60 min | |
| Ex. 1 | I | 13.4 | 13.5 | 13.7 | 0.3 |
| 2 | J | 13.2 | 13.5 | 13.8 | 0.6 |
| 3 | K | 12.5 | 12.8 | 13.0 | 0.5 |
| 4 | L | 12.7 | 12.9 | 13.3 | 0.6 |
| 5 | M | 13.1 | 13.4 | 13.9 | 0.8 |
| Comp. Ex. 1 | none | 13.4 | 14.3 | 15.7 | 2.3 |
| 2 | Irg. 1010 | 12.7 | 13.4 | 14.1 | 1.4 |

An increase in the MI value of the composition after the elapse of 30 min was small, which suggests that the cleavage of the polymer chain is very efficiently suppressed. Also, an increase (aMI) after the elapse of 60 min was very small.

### (Examples 44 to 48 and Comparative Examples 14 and 15)

A polyoxymethylene copolymer was blended with the additives (I) to (M) according to the same formulation as that of the Examples 39 to 43, and the blends were melt-kneaded and extruded at 200°C by means of an extruder to form pellets. 8 g of each pellet was allowed to stay in a molten state at 200°C for 5 min in a melt indexer, and a load was applied to the melt so that the melt flowed out. The evolved formaldehyde was caught, and the amount thereof was determined by the acetylacetone method and expressed in terms of the weight (ppm) of the evolved formaldehyde per unit weight of the resin. For comparison, the same test was conducted on a composition wherein no addition was added (Comparative Example 14) and a composition wherein Irganox 1010 was similarly incorporated (Comparative Example 15).

Yellowness index (JIS K7103) was determined through the use of these pellets by allowing them to stay within an injection molding machine at a temperature of 200°C for one hr, forming sheetlike moldings having a size of 40 mm x 70 mm x 2 mm therefrom, and measuring the coloration accompanying the staying in a molten state with a model Z-1001DP color difference meter manufactured by Nippon Denshoku Co., Ltd.

Further, these pellets were injection-molded at a cylinder temperature of 200°C to form sheetlike moldings having a size of 40 mm x 70 mm x 2 mm and JIS K7113 No. 1 tensile test pieces (thickness: 3 mm). The moldings were allowed to stand at 140°C for 8 days (heat aging). Thereafter, the tensile test pieces were subjected to the measurement of the retention of tensile elongation, and the sheetlike moldings were subjected to the measurement of coloration (yellowness index).

The results are summarized in Table 7.

**[Table 7]**

| | Additive | Amt. of evolution of gas (ppm) | Yellowness index after staying in molten state | After heat aging | |
|---|---|---|---|---|---|
| | | | | retention of elongation (%) | yellowness index |
| Ex. 44 | I | 86 | 4.7 | 36 | 11.9 |
| 45 | J | 78 | 4.4 | 34 | 12.1 |
| 46 | K | 74 | 5.1 | 35 | 12.5 |
| 47 | L | 68 | 4.8 | 36 | 12.6 |
| 48 | M | 92 | 4.6 | 34 | 12.3 |
| Comp. Ex. 14 | none | 200 | 5.0 | 20 | cracking occurred |
| 15 | Irg. 1010 | 125 | 5.8 | 30 | 13.3 |

The compositions of the present invention (Examples) exhibited a significant reduction in the amount of evolution of formaldehyde, was very low in the coloration during the staying in a molten state, and exhibited the effect of improving the retention of elongation and preventing the coloration after the heat aging.

### (Examples 49 to 54 and Comparative Examples 16 to 19)

The compounds (I) or (J) was added in an amount of 0.1, 1 or 2 parts by weight to 100 parts by weight of a polyoxymethylene copolymer not containing any additive, and an evaluation was conducted in the same manner as that of the Examples 39 to 48. For comparison, compositions wherein 0.005 part by weight and 10 parts by weight of the respective compounds were added to 100 parts by weight of a polyoxymethylene copolymer resin were similarly evaluated. The results are given in Table 8.

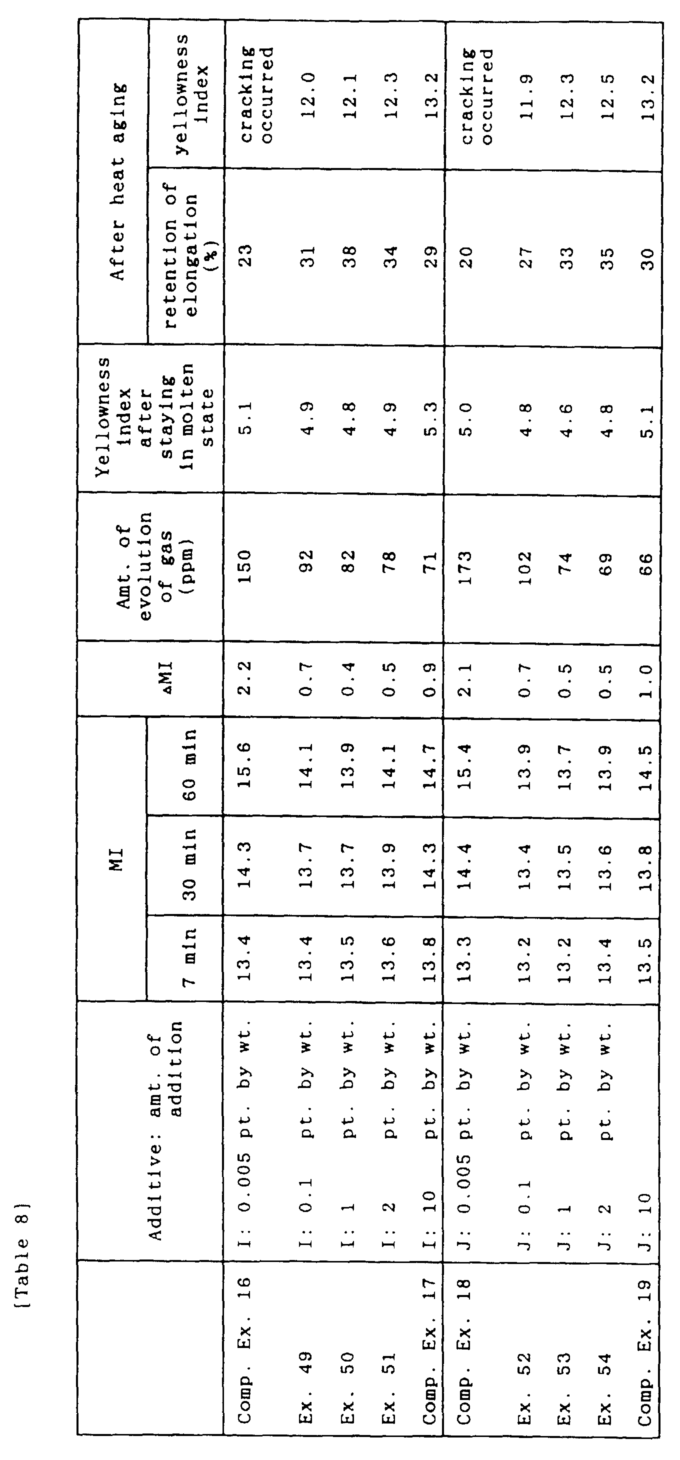

Favorable results were obtained when the amount of addition fell within the scope of the present invention. On the other hand, no sufficient effect could be attained on the prevention of the polymer decomposition and gas evolution and the retention of elongation when the amount of addition was 0.005 part by weight, and significant coloration occurred when the amount of addition was 10 parts by weight.

### (Examples 55 to 59 and Comparative Example 20)

0.3 part by weight of the compounds (I) to (M) described in the Examples 39 to 43 and 0.2 part by weight of melamine were added to 100 parts by weight of a polyoxymethylene copolymer resin not containing any additive, and the mixtures were evaluated in the same manner as that of the Examples 39 to 48. For comparison, a composition wherein 0.2 part by weight of melamine alone was similarly added was also similarly evaluated. The results are given in Table 9.

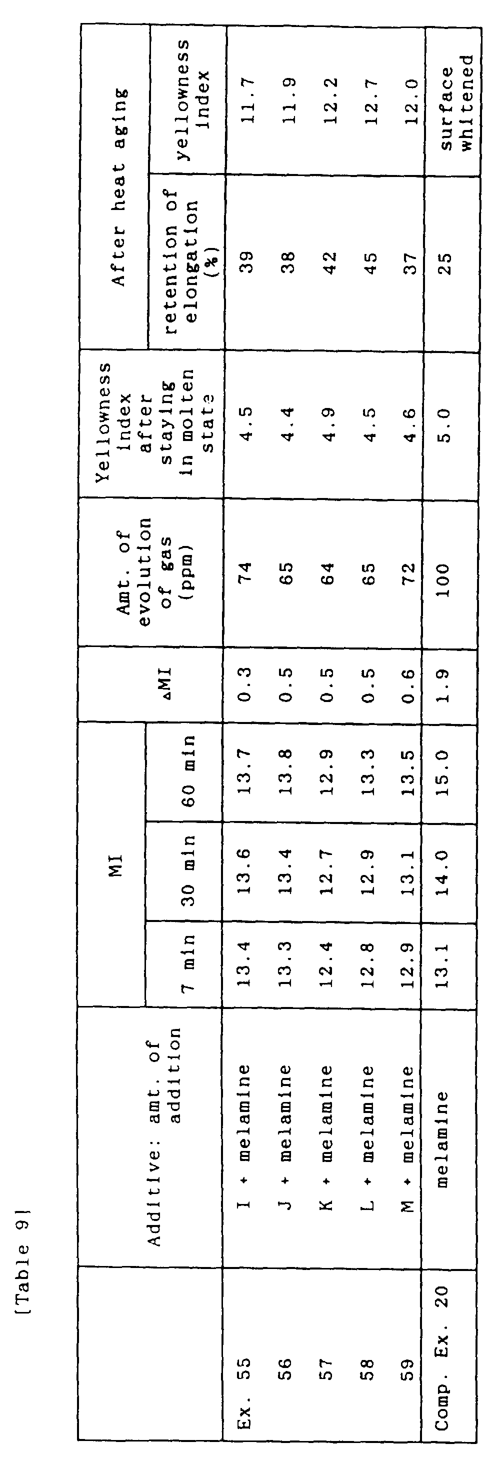

In this case as well, the compositions of the present invention exhibited a further improvement in the prevention of the evolution of formaldehyde gas, the retention of elongation after heat aging, etc.

### (Examples 60 to 69 and Comparative Examples 21 and 22)

0.2 part by weight of each of the compounds described in the Examples 39 to 43, 0.2 part by weight of Irganox 1010 as a phenol antioxidant or bis(2,2,6,6-tetramethyl-4-piperidyl)sebacate (Sanol LS-770 manufactured by Sankyo Co., Ltd.) as a hindered amine antioxidant and 0.2 part by weight of melamine were added to 100 parts by weight of a polyoxymethylene copolymer resin, and the mixtures were evaluated in the same manner as that of the Examples 39 to 48.

For comparison, a composition wherein 0.4 part by weight of Irganox 1010 and 0.2 part by weight of melamine were added (Comparative Example 21) and a composition wherein 0.4 part by weight of Sanol LS-770 and 0.2 part by weight of melamine were added (Comparative Example 22) were also evaluated in the same manner as that of the Examples. The results are summarized in Table 10.

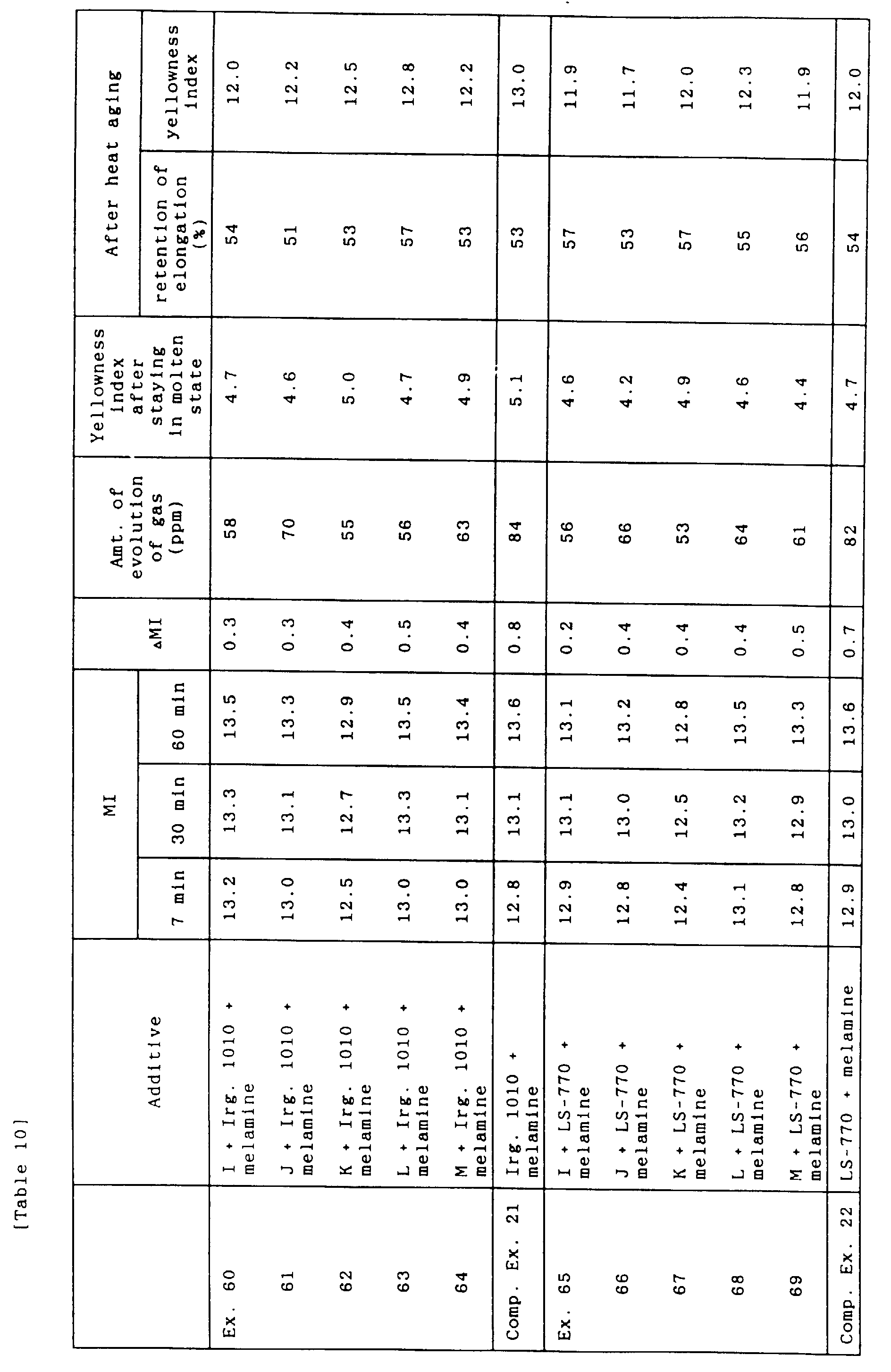

In this case as well, the compositions of the present invention exhibited a significant improvement in the retention of the elongation. On the other hand, when the compound according to the present invention was used in combination with the hindered phenol, although slight coloration was observed, the level of the coloration was lower than that in the case where the hindered phenol was added alone.

### (Examples 70 to 72 and Comparative Examples 23 and 24)

In Examples 70 to 72, 100 parts of a polyoxymethylene copolymer resin not containing any stabilizer was pulverized and each of compounds represented by the following formulas (N) to (P) was added in an amount of 0.3 part by weight to the powder and sufficiently stirred in a nitrogen atmosphere.

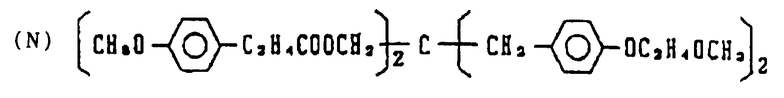

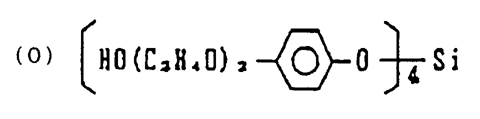

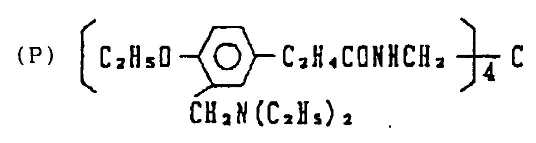

In order to evaluate the degree of cleavage of the polymer main chain in terms of a change in the melt viscosity accompanying a lowering in the molecular weight with time, 10 g of the mixture was put in a model MX101 melt indexer, manufactured by Takara Kogyo K.K., allowed to stay in a molten state at 210°C for a predetermined period of time, and passed through an orifice having an inner diameter of 2.09 mm while applying a load of 2.16 kg to measure the weight of an effluent resin per 10 min (in terms of MI value). The measurement was conducted after the elapse of 7 min, 30 min and 60 min, and an increase in the MI value after the elapse of 60 min [ΔMI = MI (60 min) - MI (7 min)] was determined.

For comparison, a polyoxymethylene copolymer resin not containing any additive, and a composition prepared by adding 0.3 part by weight of pentaerythritol tetrakis[3-(3,5-di-tert-butyl-4-hydroxytphenyl)propionate] (Irganox-1010 manufactured by Ciba-Geigy Limited) as a representative known hindered phenol antioxidant to 100 parts by weight of a polyoxymethylene copolymer in the same manner as that described above were subjected to the measurement in the same manner as that described above (Comparative Examples 23 and 24). The results are given in Table 11.

**[Table 11]**

| | Additive | MI | | | ΔMI |
|---|---|---|---|---|---|
| | | 7 min | 30 min | 60 min | |
| Ex. 70 | N | 12.9 | 13.1 | 13.4 | 0.5 |
| 71 | 0 | 13.0 | 13.3 | 13.8 | 0.8 |
| 72 | P | 13.2 | 13.5 | 13.9 | 0.7 |
| Comp. Ex. 23 | none | 13.4 | 14.3 | 15.7 | 2.3 |
| 24 | Irg. 1010 | 12.7 | 13.4 | 14.1 | 1.4 |

An increase in the MI value of the composition after the elapse of 30 min was small, which suggests that the cleavage of the polymer chain is very efficiently suppressed. Also, an increase (aMI) after the elapse of 60 min was very small.

### (Examples 73 to 75 and Comparative Examples 25 and 26)

A polyoxymethylene copolymer was blended with the additives (N) to (P) according to the same formulation as that of the Examples 70 to 72, and the blends were melt-kneaded and extruded at 200°C by means of an extruder to form pellets. 8 g of each pellet was allowed to stay in a molten state at 200°C for 5 min in a melt indexer, and a load was applied to the melt so that the melt flowed out. The evolved formaldehyde was caught, and the amount thereof was determined by the acetylacetone method and expressed in terms of the weight (ppm) of the evolved formaldehyde per unit weight of the resin. For comparison, the same test was conducted on a composition wherein no addition was added (Comparative Example 25) and a composition wherein Irganox 1010 was similarly incorporated

### (Comparative Example 26).

Yellowness index (JIS K7103) was determined through the use of these pellets by allowing them to stay within an injection molding machine at a temperature of 200°C for one hr, forming sheetlike moldings having a size of 40 mm x 70 mm x 2 mm therefrom and measuring the coloration accompanying the staying in a molten state with a model Z-1001DP color difference meter manufactured by Nippon Denshoku Co., Ltd.

Further, these pellets were injection-molded at a cylinder temperature of 200°C to form sheetlike moldings having a size of 40 mm x 70 mm x 2 mm and JIS K7113 No. 1 tensile test pieces (thickness: 3 mm). The moldings were allowed to stand at 140°C for 8 days (heat aging). Thereafter, the tensile test pieces were subjected to the measurement of the retention of tensile elongation, and the sheetlike moldings were subjected to the measurement of coloration (yellowness index). The results are summarized in Table 12.

**[Table 12]**

| | Additive | Amt. of evolution of gas (ppm) | Yellowness index after staying in molten state | After heat aging | |
|---|---|---|---|---|---|
| | | | | retention of elongation (%) | yellowness index |
| Ex. 73 | N | 83 | 4.6 | 33 | 12.3 |
| 74 | 0 | 92 | 5.0 | 32 | 12.4 |
| 75 | P | 96 | 5.2 | 29 | 12.2 |
| Comp. Ex. 25 | none | 200 | 5.0 | 20 | cracking occurred |
| 26 | Irg. 1010 | 125 | 5.8 | 30 | 13.3 |

The compositions of the present invention (Examples) exhibited a significant reduction in the amount of evolution of formaldehyde, was very low in the coloration during the staying in a molten state, and exhibited the effect of improving the retention of elongation and preventing the coloration after the heat aging.

### (Examples 76 to 78 and Comparative Examples 27 and 28)

The compound (N) was added in an amount of 0.1, 1 or 2 parts by weight to 100 parts by weight of a polyoxymethylene copolymer not containing any additive, and an evaluation was conducted in the same manner as that of the Examples 70 to 75. For comparison, compositions wherein the compound (N) was added in an amount of 0.005 part by weight in one composition and in an amount of 10 parts by weight in another composition to 100 parts by weight of a polyoxymethylene copolymer resin were similarly evaluated. The results are given in Table 13.

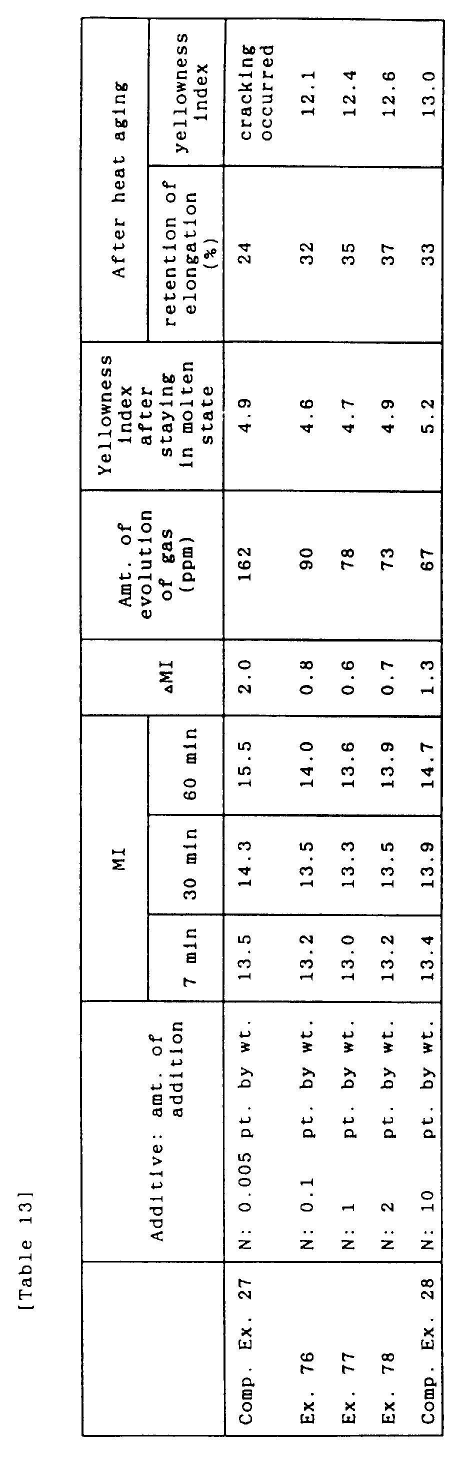

Favorable results were obtained when the amount of addition fell within the scope of the present invention. On the other hand, no sufficient effect could be attained on the prevention of the polymer decomposition and gas evolution and the retention of elongation when the amount of addition was 0.005 part by weight, and significant coloration occurred when the amount of addition was 10 parts by weight.

### (Examples 79 to 81 and Comparative Example 29)

0.3 part by weight of the compounds (N) to (P) described in the Examples 70 to 72 and 0.2 part by weight of melamine were added to 100 parts by weight of a polyoxymethylene copolymer resin not containing any additive, and the mixtures were evaluated in the same manner as that of the Examples 70 to 75. For comparison, a composition wherein 0.2 part by weight of melamine alone was similarly added was also similarly evaluated. The results are given in Table 14.

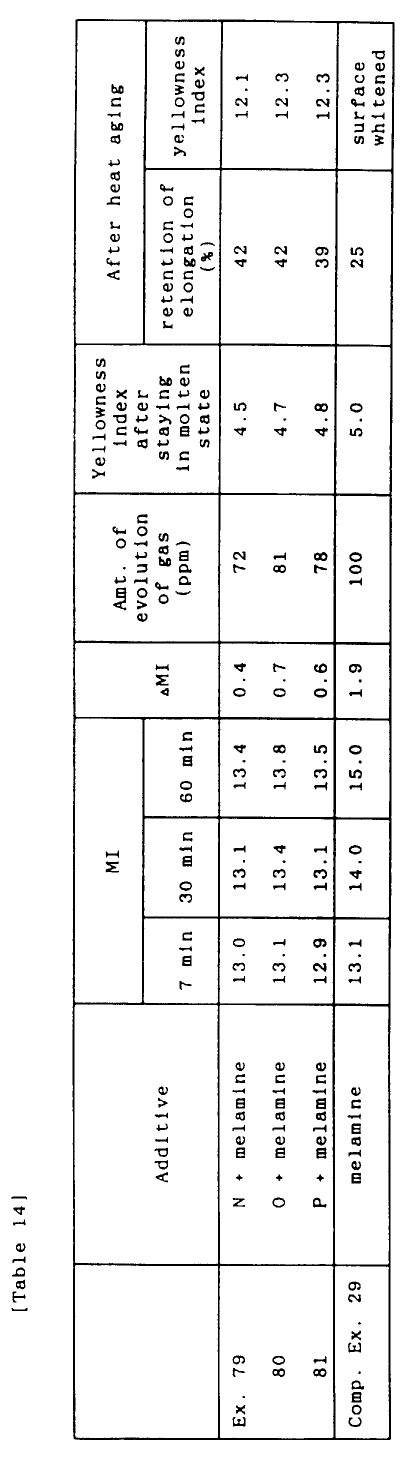

In this case as well, the compositions of the present invention exhibited a further improvement in the prevention of the evolution of formaldehyde gas, the retention of elongation after heat aging, etc.

### (Examples 82 to 87 and Comparative Examples 30 and 31)

0.2 part by weight of each of the compounds described in the Examples 70 to 72, 0.2 part by weight of Irganox 1010 as a phenol antioxidant or bis(2,2,6,6-tetramethyl-4-piperidyl)sebacate (Sanol LS-770 manufactured by Sankyo Co., Ltd.) as a hindered amine antioxidant and 0.2 part by weight of melamine were added to 100 parts by weight of a polyoxymethylene copolymer resin, and the mixtures were evaluated in the same manner as that of the Examples 70 to 75.

For comparison, a composition wherein 0.4 part by weight of Irganox 1010 and 0.2 part by weight of melamine were added (Comparative Example 30) and a composition wherein 0.4 part by weight of Sanol LS-770 and 0.2 part by weight of melamine were added (Comparative Example 31) were also evaluated in the same manner as that of the Examples. The results are summarized in Table 15.

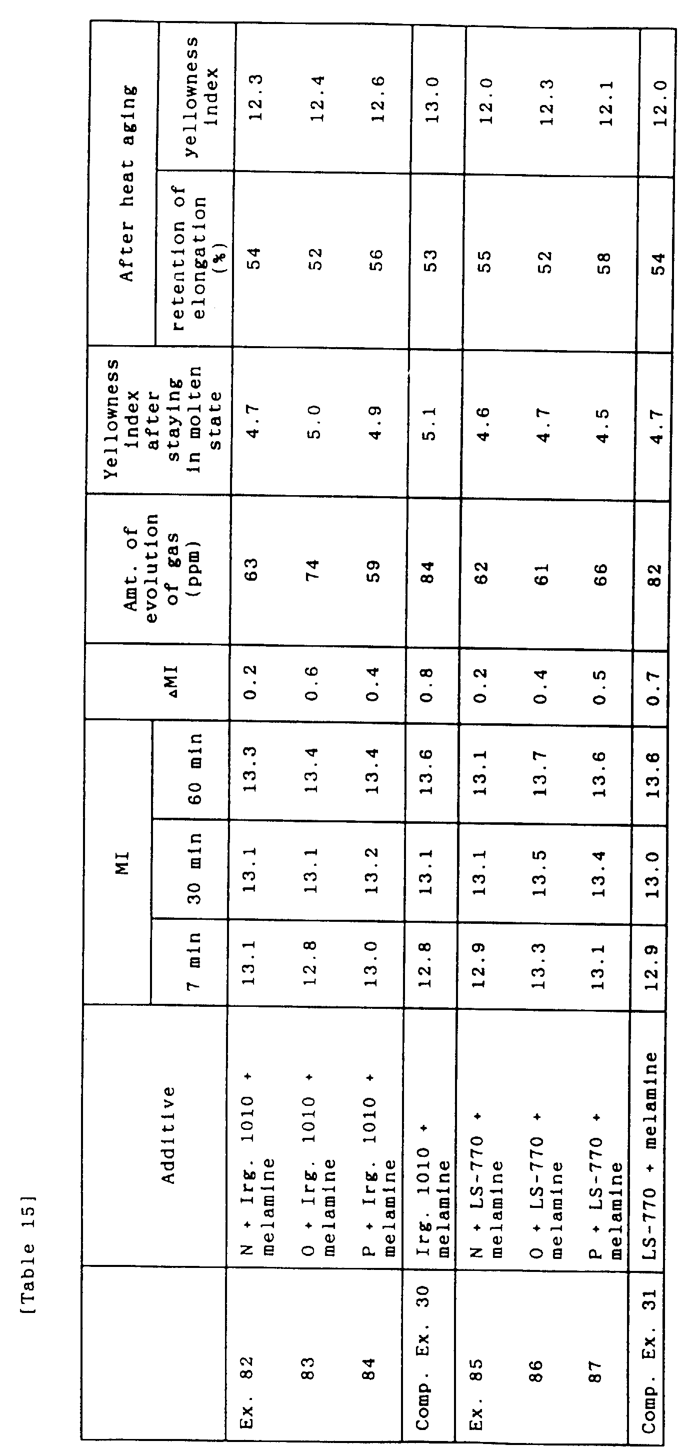

In this case as well, the compositions of the present invention exhibited the effect of suppressing the change of MI and the generation of formaldehyde gas and was excellent also in the retention of the elongation. On the other hand, when the compound according to the present invention was used in combination with the hindered phenol, although slight coloration was observed, the level of the coloration was lower than that in the case where the hindered phenol was added alone (Comparative Example 30).

## Claims

1. A stabilized polyoxymethylene resin composition comprising a polyoxymethylene resin and 0.01 to 5% by weight, based on the polyoxymethylene resin, of a compound selected from the group consisting of the compounds represented by the general formulas (I) to (III):
Y¹-O-Ar¹-X¹-Ar²-O-Y² (I) 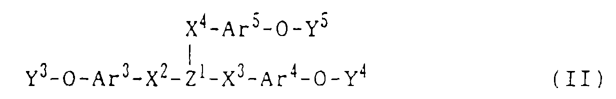 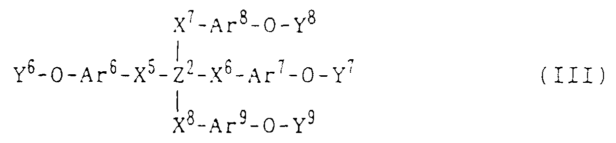
wherein
X¹ to X⁸ stand for at least one divalent atomic group selected from among -CₚH₂ₚ-, -CₚH₂ₚOC_{q}H_{2q}-, -CₚH₂ₚSC_{q}H_{2q}-, -CₚH₂ₚN(CᵣH₂ᵣ₊₁)C_{q}H_{2q}-, -CₚH₂ₚCOC_{q}H_{2q}-, -CₚH₂ₚCOOC_{q}H_{2q}-, -CₚH₂ₚCON(CᵣH₂ᵣ₊₁)C_{q}H_{2q}-, -CₚH₂ₚS(=O)₂C_{q}H_{2q}-, -CₚH₂ₚP(=O)(R)C_{q}H_{2q}-, -CₚH₂ₚP(=O)(R)OC_{q}H_{2q}- and -CₚH₂ₚOP(=O)(R)OC_{q}H_{2q}- (wherein p, q and r stand for each an integer of 0 to 20, R stands for a C₁ to C₂₀ alkyl or alkoxy group or a phenyl or phenoxy group) and may be the same or different,
Y¹ to Y⁹ stand for a monovalent atomic group selected from among -CₘH₂ₘ₊₁, -(CₘH₂ₘO)ₙCₚH₂ₚ₊₁, -CₘH₂ₘSCₚH₂ₚ₊₁, -CₘH₂ₘN(CₚH₂ₚ₊₁)(C_{q}H_{2q+1}), -CₘH₂ₘCOCₙH₂ₙ₊₁, -CₘH₂ₘCOOCₙH₂ₙ₊₁, -CₘH₂ₘOCOCₙH₂ₙ₊₁, -CₘH₂ₘCON(CₚH₂ₚ₊₁)(C_{q}H_{2q+1}), -CₘH₂ₘN(CₚH₂ₚ₊₁)COC_{q}H_{2q+1}, -CₘH₂ₘS(=O)₂CₙH₂ₙ₊₁, -CₘH₂ₘP(=O)(R)CₙH₂ₙ₊₁, -CₘH₂ₘP(=O)(R)OCₙH₂ₙ₊₁, -CₘH₂ₘOP(=O)(R)CₙH₂ₙ₊₁ and -CₘH₂ₘOP(=O)(R)OCₙH₂ₙ₊₁ (wherein m and n stand for each an integer of 1 to 20, p and q stand for each an integer of 0 to 20, R stands for a C₁ to C₂₀ alkyl or alkoxy group or a phenyl or phenoxy group and may be the same or different,
Z¹ is a trivalent group selected from among 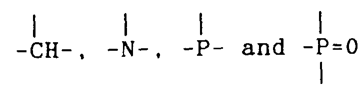 groups,
Z² is a tetravalent element selected from among 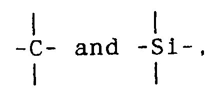 and
Ar¹ to Ar⁹ stand for an arylene group not having a directly bonded hydroxyl group and may be the same or different.

2. A stabilized polyoxymethylene resin composition according to claim 1,
wherein
X¹ in the general formula (I) stands for a divalent atomic group selected from among -CₚH₂ₚ-, -CₚH₂ₚOC_{q}H_{2q}-, -CₚH₂ₚSC_{q}H_{2q}-, -CₚH₂ₚN(CᵣH₂ᵣ₊₁)C_{q}H_{2q}-, -CₚH₂ₚCOC_{q}H_{2q}-, -CₚH₂ₚCOOC_{q}H_{2q}- and -CₚH₂ₚS(=O)₂C_{q}H_{2q}- (wherein p, q and r stand for each an integer of 0 to 20),
X² to X⁴ in the general formula (II) stand for a divalent atomic group selected from among -CₚH₂ₚ-, -CₚH₂ₚOC_{q}H_{2q}-, -CₚH₂ₚSC_{q}H_{2q}-, -CₚH₂ₚCON(CᵣH₂ᵣ₊₁)C_{q}H_{2q}-, -CₚH₂ₚCOC_{q}H_{2q}-, -CₚH₂ₚCOOC_{q}H_{2q}- and -CₚH₂ₚS(=O)₂C_{q}H_{2q}- (wherein p, q and r stand for each an integer of 0 to 20), and,
X⁵ to X⁸ in the general formula (III) stand for a divalent atomic group selected from among -CₚH₂ₚ-, -CₚH₂ₚOC_{q}H_{2q}-, -CₚH₂ₚSC_{q}H_{2q}-, -CₚH₂ₚCON(CᵣH₂ᵣ₊₁)C_{q}H_{2q}-, -CₚH₂ₚCOC_{q}H_{2q}- and -CₚH₂ₚCOOC_{q}H_{2q}- (wherein p, q and r stand for each an integer of 0 to 20).

3. A stabilized polyoxymethylene resin composition according to claim 1,
wherein
Y¹ and Y² in the general formula (I) stand for a monovalent atomic group selected from among -CₘH₂ₘ₊₁, -(CₘH₂ₘO)ₙCₚH₂ₚ₊₁, -CₘH₂ₘCOOCₙH₂ₙ₊₁, -CₘH₂ₘOCOCₙH₂ₙ₊₁ and -CₘH₂ₘN(CₚH₂ₚ₊₁)(C_{q}H_{2q+1}) (wherein m and n stand for each an integer of 1 to 20, and p and q stand for each an integer of 0 to 20),
Y³ to Y⁵ in the general formula (II) stand for a monovalent atomic group selected from among -CₘH₂ₘ₊₁, -(CₘH₂ₘO)ₙCₚH₂ₚ₊₁, -CₘH₂ₘCOOCₙH₂ₙ₊₁, -CₘH₂ₘOCOCₙH₂ₙ₊₁ and -CₘH₂ₘSCₚH₂ₚ₊₁ (wherein m and n stand for each an integer of 1 to 20, and p stand for an integer of 0 to 20), and,
Y⁶ to Y⁹ in the general formula (III) stand for a monovalent atomic group selected from among -CₘH₂ₘ₊₁, -(CₘH₂ₘO)ₙCₚH₂ₚ₊₁, -CₘH₂ₘCOOCₙH₂ₙ₊₁, -CₘH₂ₘOCOCₙH₂ₙ₊₁ and -CₘH₂ₘN(CₚH₂ₚ₊₁)(C_{q}H_{2q+1}) (wherein m and n stand for each an integer of 1 to 20, and p and q stand for each an integer of 0 to 20).

4. A stabilized polyoxymethylene resin composition according to claim 1,
wherein Ar³ to Ar⁹ in the general formulas (II) and (III) stand for each a benzene or naphthalene ring not having a directly bonded hydroxyl group.

5. A stabilized polyoxymethylene resin composition according to claim 1,
wherein
Ar¹ and Ar² in the general formula (I) stand for each a benzene ring having no substituent except for -X¹-, -OY¹ and -OY², or having as a substituent an atomic group selected from among -CₘH₂ₘ₊₁, -(CₘH₂ₘO)ₙCₚH₂ₚ₊₁, -CₘH₂ₘSCₚH₂ₚ₊₁, -CₘH₂ₘCOCₙH₂ₙ₊₁, -CₘH₂ₘCOOCₙH₂ₙ₊₁, -CₘH₂ₘOCOCₙH₂ₙ₊₁, -CₘH₂ₘS(=O)₂CₙH₂ₙ₊₁, -CₘH₂ₘP(=O)(R)CₙH₂ₙ₊₁, -CₘH₂ₘP(=O)(R)OCₙH₂ₙ₊₁, -CₘH₂ₘOP(=O)(R)CₙH₂ₙ₊₁, -CₘH₂ₘOP(=O)(R)OCₙH₂ₙ₊₁, -CₘH₂ₘN(CₚH₂ₚ₊₁)(C_{q}H_{2q+1}), -CₘH₂ₘCON(CₚH₂ₚ₊₁)(C_{q}H_{2q+1}) and -CₘH₂ₘN-(CₚH₂ₚ₊₁)COC_{q}H_{2q+1} (wherein m and n stand for each an integer of 1 to 20, p and q stand for each an integer of 0 to 20, and R stand for a C₁ to C₂₀ alkyl or alkoxy group or a phenyl or phenoxy group) and a phenyl group,
Ar³ to Ar⁹ in the general formulas (II) and (III) stand for a benzene ring having no substituent except for X² to X⁸ and -OY³ to -OY⁹ or having as a substituent an atomic group selected from among -CₘH₂ₘ₊₁, -(CₘH₂ₘO)ₙCₚH₂ₚ₊₁, -CₘH₂ₘSCₚH₂ₚ₊₁, -CₘH₂ₘCOCₙH₂ₙ₊₁, -C₂H₂ₘCOOCₙH₂ₙ₊₁, -CₘH₂ₘOCOCₙH₂ₙ₊₁, -CₘH₂ₘS(=O)₂CₙH₂ₙ₊₁, -CₘH₂ₘN(CₚH₂ₚ₊₁)(C_{q}H_{2q+1}), -CₘH₂ₘCON(CₚH₂ₚ₊₁)(C_{q}H_{2q+1}), -CₘH₂ₘN(CₚH₂ₚ₊₁)COC_{q}H_{2q+1}, -CₘH₂ₘPR¹R², -CₘH₂ₘP(=O)R¹R², -CₘH₂ₘOPR¹R², -CₘH₂ₘOP(=O)R¹R² (wherein m and n stand for each an integer of 1 to 20, p and q stand for each an integer of 0 to 20, and R¹ and R² stand for each a C₁ to C₂₀ alkyl or alkoxy group or a phenyl or phenoxy group) and a phenyl group.

6. A stabilized polyoxymethylene resin composition according to claim 1, wherein the resin composition further contains at least one member selected from the group consisting of a phenolic compound; a nitrogenous compound; a hydroxide, an inorganic acid salt and a carboxylic acid salt of an alkali metal; and a hydroxide, an inorganic acid salt and a carboxylic acid salt of an alkaline earth metal.

## Patentansprüche

1. Stabilisierte Polyoxymethylenharz-Zusammensetzung, umfassend ein Polyoxymethylenharz und 0,01 bis 5 Gew.-%, bezogen auf das Polyoxymethylenharz, einer Verbindung, die aus der Gruppe ausgewählt ist, die aus den Verbindungen besteht, die durch die allgemeinen Formeln (I) bis (III) dargestellt werden:
Y¹-O-Ar¹-X¹-Ar²-O-Y² (I) 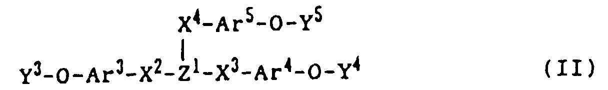 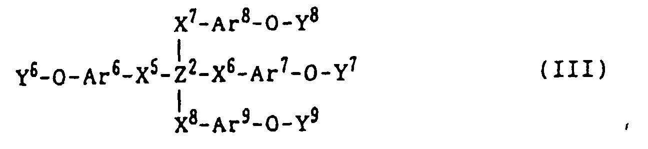
worin
X¹ bis X⁸ wenigstens eine zweiwertige Atomgruppe darstellen, die aus CₚH₂ₚ-, CₚH₂ₚOC_{q}H_{2q}-, -CₚH₂ₚSC_{q}H_{2q}-, -CₚH₂ₚN(CᵣH₂ᵣ₊₁)C_{q}H_{2q}-, -CₚH₂ₚCOC_{q}H_{2q}-, -CₚH₂ₚCOOC_{q}H_{2q}, -CₚH₂ₚCON(CᵣH₂ᵣ₊₁)C_{q}H_{2q}-, CₚH₂ₚS(=O)₂C_{q}H_{2q}-, -CₚH₂ₚP(=O)(R)C_{q}H_{2q}-, -CₚH₂ₚP(=O)(R)OC_{q}H_{2q}- und -CₚH₂ₚOP(=O)(R)OC_{q}H_{2q}- (worin p, q und r jeweils eine ganze Zahl von 0 bis 20 bedeuten, R eine C₁- bis C₂₀-Alkyl- oder Alkyoxy-Gruppe oder eine Phenyl- oder Phenoxy-Gruppe darstellt) ausgewählt ist, und gleich oder voneinander verschieden sein können,
Y¹ bis Y⁹ eine einwertige Atomgruppe darstellen, die aus -CₘH₂ₘ₊₁, -(CₘH₂ₘO)ₙCₚH₂ₚ₊₁, -CₘH₂ₘSCₚH₂ₚ₊₁, -CₘH₂ₘN(CₚH₂ₚ₊₁)(C_{q}H_{2q+1}), -CₘH₂ₘCOCₘH₂ₙ₊₁, -CₘH₂ₘCOOCₙH₂ₙ₊₁, -CₘH₂ₘOCOCₙH₂ₙ₊₁, -CₘH₂ₘCON(CₚH₂ₚ₊₁)(C_{q}H_{2q+1}), -CₘH₂ₘN(CₚH₂ₚ₊₁₎COC_{q}H_{2q+1}, -CₘH₂ₘS(=O)₂CₙH₂ₙ₊₁, -CₘH₂ₘP(=O)(R)CₙH₂ₙ₊₁, -CₘH₂ₘP(=O)(R)OCₙH₂ₙ₊₁, -CₘH₂ₘOP(=O)(R)CₙH₂ₙ₊₁, und -CₘH₂ₘOP(=O)(R)OCₙH₂ₙ₊₁ (worin m und n jeweils eine ganze Zahl von 1 bis 20 bedeuten, p und q jeweils eine ganze Zahl von 0 bis 20 bedeuten, R eine C₁- bis C₂₀-Alkyl- oder Alkoxy-Gruppe oder eine Phenyl- oder Phenoxy-Gruppe darstellt) ausgewählt ist, und gleich oder voneinander verschieden sein können,
Z¹ eine dreiwertige Gruppe ist, die aus 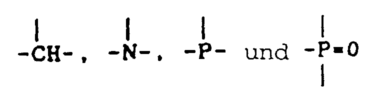 -Gruppen ausgewählt ist,
Z² ein vierwertiges Element ist, das aus 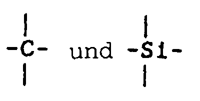 ausgewählt ist, und
Ar¹ bis Ar⁹ eine Arylen-Gruppe darstellen, die keine direkt gebundene Hydroxyl-Gruppe aufweist, und die gleich oder voneinander verschieden sein können.

2. Stabilisierte Polyoxymethylenharz-Zusammensetzung gemäß Anspruch 1, worin
X¹ in der allgemeinen Formel (I) eine zweiwertige Atomgruppe darstellt, die aus -CₚH₂ₚ, -CₚH₂ₚOC_{q}H_{2q}-, -CₚH₂ₚSC_{q}H_{2q}-, CₚH₂ₚN(CᵣH₂ᵣ₊₁₎C_{q}H_{2q}-, -CₚH₂ₚCOC_{q}H_{2q}-, -CₚH₂ₚCOOC_{q}H_{2q}- and -CₚH₂ₚS(=O)₂C_{q}H_{2q}- (worin p, q und r jeweils eine ganze Zahl von 0 bis 20 darstellen) ausgewählt ist,
X² bis X⁴ in der allgemeinen Formel (II) eine zweiwertige Atomgruppe darstellen, die aus -CₚH₂ₚ, -CₚH₂ₚOC_{q}H_{2q}-, -CₚH₂ₚSC_{q}H_{2q}-, -CₚH₂ₚCON(CᵣH₂ᵣ₊₁)C_{q}H_{2q}-, -CₚH₂ₚCOC_{q}H_{2q}-, -CₚH₂ₚCOOC_{q}H_{2q}- und -CₚH₂ₚS(=O)₂C_{q}H_{2q}- (worin p, q und r jeweils eine ganze Zahl von 0 bis 20 darstellen) ausgewählt ist, und
X⁵ bis X⁸ in der allgemeinen Formel (III) eine zweiwertige Atomgruppe darstellen, die aus -CₚH₂ₚ, -CₚH₂ₚOC_{q}H_{2q}-, -CₚH₂ₚSC_{q}H_{2q}-, -CₚH₂ₚCON(CᵣH₂ᵣ₊₁)C_{q}H_{2q}-, -CₚH₂ₚCOC_{q}H_{2q}- und -CₚH₂ₚCOOC_{q}H_{2q}- (worin p, q und r jeweils eine ganze Zahl von 0 bis 20 darstellen) ausgewählt ist.

3. Stabilisierte Polyoxymethylenharz-Zusammensetzung gemäß Anspruch 1, worin
Y¹ und Y² in der allgemeinen Formel (I) eine einwertige Atomgruppe darstellen, die aus -CₘH₂ₘ₊₁, -(CₘH₂ₘO)ₙCₚH₂ₚ₊₁, -CₘH₂ₘCOOCₙH₂ₙ₊₁, -CₘH₂ₘOCOCₙH₂ₙ₊₁ und -CₘH₂ₘN(CₚH₂ₚ₊₁)(C_{q}H_{2q+1}) (worin m und n jeweils eine ganze Zahl von 1 bis 20 bedeuten und p und q jeweils eine ganze Zahl von 0 bis 20 bedeuten) ausgewählt ist,
Y³ bis Y⁵ in der allgemeinen Formel (II) eine einwertige Atomgruppe darstellen, die aus -CₘH₂ₘ₊₁, -(CₘH₂ₘO)ₙCₚH₂ₚ₊₁, -CₘH₂ₘCOOCₙH₂ₙ₊₁, -CₘH₂ₘOCOCₙH₂ₙ₊₁ und -CₘH₂ₘSCₚH₂ₚ₊₁ (worin m und n jeweils eine ganze Zahl von 1 bis 20 bedeuten und p und q jeweils eine ganze Zahl von 0 bis 20 bedeuten) ausgewählt ist, und
Y⁶ bis Y⁹ in der allgemeinen Formel (III) eine einwertige Atomgruppe darstellen, die aus -CₘH₂ₘ₊₁, -(CₘH₂ₘO)ₙCₚH₂ₚ₊₁, -CₘH₂ₘCOOCₙH₂ₙ₊₁, -CₘH₂ₘOCOCₙH₂ₙ₊₁ und -CₘH₂ₘN(CₚH₂ₚ₊₁)(C_{q}H_{2q+1}) (worin m und n jeweils eine ganze Zahl von 1 bis 20 bedeuten und p und q jeweils eine ganze Zahl von 0 bis 20 bedeuten) ausgewählt ist.

4. Stabilisierte Polyoxymethylenharz-Zusammensetzung gemäß Anspruch 1, worin
Ar³ bis Ar⁹ in den allgemeinen Formeln (II) und (III) jeweils einen Benzol- oder Naphthalinring darstellen, der keine direkt gebundene Hydroxyl-Gruppe aufweist.

5. Stabilisierte Polyoxymethylenharz-Zusammensetzung gemäß Anspruch 1, worin
Ar¹ und Ar² in der allgemeinen Formel (I) jeweils einen Benzolring darstellen, der keinen Substituenten aufweist, außer für -X¹-, -OY¹- und -OY², oder als Substituenten eine Atomgruppe aufweist, die aus -CₘH₂ₘ₊₁, -(CₘH₂ₘO)ₙCₚH₂ₚ₊₁, -CₘH₂ₘSCₚH₂ₚ₊₁, -CₘH₂ₘCOCₙH₂ₙ₊₁, -CₘH₂ₘCOOCₙH₂ₙ₊₁, -Cₘ2ₘOCOCₙH₂ₙ₊₁, -CₘH₂ₘS(=O)₂CₙH₂ₙ₊₁, -CₘH₂ₘP(=O)(R)CₙH₂ₙ₊₁, -CₘH₂ₘP(=O)(R)OCₙH₂ₙ₊₁, -CₘH₂ₘOP(=O)(R)CₙH₂ₙ₊₁, -CₘH₂ₘOP(=O)(R)OCₙH₂ₙ₊₁, -CₘH₂ₘN(CₚH₂ₚ₊₁)(C_{q}H_{2q+1}), -CₘH₂ₘCON(CₚH₂ₚ₊₁)(C_{q}H_{2q+1})und -CₘH₂ₘN(CₚH₂ₚ₊₁)COC_{q}H_{2q+1} (worin m und n jeweils eine ganze Zahl von 1 bis 20 und p und q jeweils eine ganze Zahl von 0 bis 20 bedeuten, und R eine C₁- bis C₂₀-Alkyl- oder Alkoxy-Gruppe oder eine Phenyl- oder Phenoxy-Gruppe darstellt) und einer Phenylgruppe ausgewählt ist,
Ar³ bis Ar⁹ in den allgemeinen Formeln (II) und (III) einen Benzolring darstellen, der keinen Substituenten aufweist, außer für X² bis X⁸ und -OY³ bis -OY⁹, oder als Substituenten eine Atomgruppe aufweist, die aus -CₘH₂ₘ₊₁, -(CₘH₂ₘO)ₙCₚH₂ₚ₊₁, -CₘH₂ₘSCₚH₂ₚ₊₁, -CₘH₂ₘCOCₙH₂ₙ₊₁, -CₘH₂ₘCOOCₙH₂ₙ₊₁, -CₘH₂ₘOCOCₙH₂ₙ₊₁, -CₘH₂ₘS(=O)₂CₙH₂ₙ₊₁, -CₘH₂ₘN(CₚH₂ₚ₊₁)(C_{q}H_{2q+1}), -CₘH₂ₘCON(CₚH₂ₚ₊₁)(C_{q}H_{2q+1}), -CₘH₂ₘN(CₚH₂ₚ₊₁)COC_{q}H_{2q+1}, -CₘH₂ₘPR¹R², -CₘH₂ₘP(=O)R¹R², -CₘH₂ₘOPR¹R², -CₘH₂ₘOP(=O)R¹R² (worin m und n jeweils eine ganze Zahl von 1 bis 20 und p und q jeweils eine ganze Zahl von 0 bis 20 bedeuten, und R¹ und R² jeweils eine C₁- bis C₂₀-Alkyl- oder Alkoxy-Gruppe oder eine Phenyl- oder Phenoxy-Gruppe darstellen) und einer Phenylgruppe ausgewählt ist.

6. Stabilisierte Polyoxymethylenharz-Zusammensetzung gemäß Anspruch 1, worin die Harz-Zusammensetzung weiterhin wenigstens einen Anteil enthält, der aus der aus einer Phenol-Verbindung, einer Stickstoff-Verbindung, einem Hydroxid, einem anorganischen Salz und einem Carbonsäure-Salz eines Alkalimetalls, und einem Hydroxid, einem anorganischen Salz und einem Carbonsäure-Salz eines Erdalkalimetalls bestehenden Gruppe ausgewählt ist.

## Revendications

1. Une composition de résine de polyoxyméthylène stabilisée, comprenant une résine de polyoxyméthylène et 0,01 à 5 % en poids, par rapport à la résine de polyoxyméthylène, d'un composé choisi dans le groupe constitué des composés représentés par les formules générales (I) à (III) :
Y¹-O-Ar¹-X¹-Ar²-O-Y² (I) 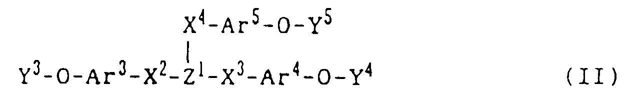 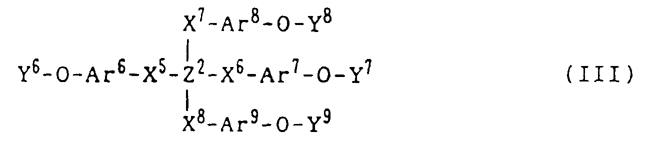
où
X¹ à X⁸ représentent au moins un groupe atomique divalent choisi parmi -CₚH₂ₚ-, -CₚH₂ₚOC_{q}H_{2q}-, -CₚH₂ₚSC_{q}H_{2q}-, -CₚH₂ₚN(CᵣH₂ᵣ₊₁)C_{q}H_{2q}-, -CₚH₂ₚCOC_{q}H_{2q}-, -CₚH₂ₚCOOC_{q}H_{2q}-, -CₚH₂ₚCON(CᵣH₂ᵣ₊₁)C_{q}H_{2q}-, -CₚH₂ₚS(=O)₂C_{q}H_{2q}-, -CₚH₂ₚP(=O)(R)C_{q}H_{2q}-, -CₚH₂ₚP(=O)(R)OC_{q}H_{2q}- et -CₚH₂ₚOP(=O)(R)OC_{q}H_{2q}- (où p, q et r représentent chacun un nombre entier de 0 à 20, R représente un groupe alkyle ou alcoxy en C₁ à C₂₀ ou un groupe phényle ou phénoxy) et peuvent être identiques ou différents,
Y¹ à Y⁹ représentent un groupe atomique monovalent choisi parmi -CₘH₂ₘ₊₁, -(CₘH₂ₘO)ₙCₚH₂ₚ₊₁, -CₘH₂ₘSCₚH₂ₚ₊₁, -CₘH₂ₘN(CₚH₂ₚ₊₁)(C_{q}H_{2q+1}), -CₘH₂ₘCOCₙH₂ₙ₊₁, -CₘH₂ₘCOOCₙH₂ₙ₊₁, -CₘH₂ₘOCOCₙH₂ₙ₊₁, -CₘH₂ₘCON(CₚH₂ₚ₊₁)(C_{q}H_{2q+1}), -CₘH₂ₘN(CₚH₂ₚ₊₁)COC_{q}H_{2q+1} , -CₘH₂ₘS(=O)₂CₙH₂ₙ₊₁, -CₘH₂ₘP(=O)(R)CₙH₂ₙ₊₁, CₘH₂ₘP(=O)(R)OCₙH₂ₙ₊₁, -CₘH₂ₘOP(=O)(R)CₙH₂ₙ₊₁ et -CₘH₂ₘOP(=O)(R)OCₙH₂ₙ₊₁ (où m et n représentent chacun un nombre entier de 1 à 20, p et q représentent chacun un nombre entier de 0 à 20, R représente un groupe alkyle ou alcoxy en C₁-C₂₀ ou un groupe phényle ou phénoxy) et peuvent être identiques ou différents,
Z¹ est un groupe trivalent choisi parmi les groupes 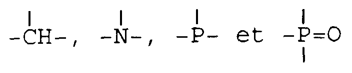
Z² est un élément tétravalent choisi parmi 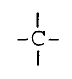 et 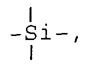 et
Ar¹ à Ar⁹ représentent un groupe arylène n'ayant pas de groupe hydroxyle lié directement et peuvent être identiques ou différents.

2. Une composition de résine de polyoxyméthylène stabilisée selon la revendication 1, dans laquelle
X¹, dans la formule générale (I), représente un groupe atomique divalent choisi parmi -CₚH₂ₚ-, -CₚH₂ₚOC_{q}H_{2q}-, -CₚH₂ₚSC_{q}H_{2q}-, -CₚH₂ₚN(CᵣH₂ᵣ₊₁)C_{q}H_{2q}-, -CₚH₂ₚCOC_{q}H_{2q}-, -CₚH₂ₚCOOC_{q}H_{2q}- et -CₚH₂ₚS(=O)₂C_{q}H_{2q} (où p, q et r représentent chacun un nombre entier de 0 à 20) ;
X² à X⁴, dans la formule générale (II), représentent un groupe atomique divalent choisi parmi -CₚH₂ₚ-, -CₚH₂ₚOC_{q}H_{2q}, -CₚH₂ₚSC_{q}H_{2q}-, -CₚH₂ₚCON(CᵣH₂ᵣ₊₁)C_{q}H_{2q}-, -CₚH₂ₚCOC_{q}H_{2q}-, -CₚH₂ₚCOOC_{q}H_{2q} et -CₚH₂ₚS(=O)₂C_{q}H_{2q}- (où p, q et r représentent chacun un nombre entier de 0 à 20), et
X⁵ à X⁸, dans la formule générale (III), représentent un groupe atomique divalent choisi parmi -CₚH₂ₚ-, -CₚH₂ₚOC_{q}H_{2q}, -CₚH₂ₚSC_{q}H_{2q}-, -CₚH₂ₚCON(CᵣH₂ᵣ₊₁)C_{q}H_{2q}-, -CₚH₂ₚCOC_{q}H_{2q}- et -CₚH₂ₚCOOC_{q}H_{2q}- (où p, q et r représentent chacun un nombre entier de 0 à 20).

3. Une composition de résine de polyoxyméthylène stabilisée selon la revendication 1, dans laquelle
Y¹ et Y², dans la formule générale (I), représentent un groupe atomique monovalent choisi parmi -CₘH₂ₘ₊₁, -(CₘH₂ₘO)ₙCₚH₂ₚ₊₁, -CₘH₂ₘCOOCₙH₂ₙ₊₁, -CₘH₂ₘOCOCₙH₂ₙ₊₁ et -CₘH₂ₘN(CₚH₂ₚ₊₁)(C_{q}H_{2q+1}) (où m et n représentent chacun un nombre entier de 1 à 20, et p et q représentent chacun un nombre entier de 0 à 20),
Y³ à Y⁵, dans la formule générale (II), représentent un groupe atomique monovalent choisi parmi -CₘH_{2m+1,} -(CₘH₂ₘO)ₙCₚH₂ₚ₊₁, -CₘH₂ₘCOOCₙH₂ₙ₊₁, -CₘH₂ₘOCOCₙH₂ₙ₊₁ et CₘH₂ₘSCₚH₂ₚ₊₁ (où m et n représentent chacun un nombre entier de 1 à 20, et p représente un nombre entier de 0 à 20), et
Y⁶ à Y⁹, dans la formule générale (III), représentent un groupe atomique monovalent choisi parmi -CₘH₂ₘ₊₁, -(CₘH₂ₘO)ₙCₚH₂ₚ₊₁, -CₘH₂ₘCOOCₙH₂ₙ₊₁, -CₘH₂ₘOCOCₙH₂ₙ₊₁ et -CₘH₂ₘN(CₚH₂ₚ₊₁)(C_{q}H_{2q+1}) (où m et n représentent chacun un nombre entier de 1 à 20, et p et q représentent chacun un nombre entier de 0 à 20).

4. Une composition de résine de polyoxyméthylène stabilisée selon la revendication 1, dans laquelle
Ar³ à Ar⁹, dans les formules générales (II) et (III), représentent chacun un noyau benzénique ou naphtalénique n'ayant pas de groupe hydroxyle lié directement.

5. Une composition de résine de polyoxyméthylène stabilisée selon la revendication 1, dans laquelle
Ar¹ et Ar², dans la formule générale (I), représentent chacun un noyau benzénique n'ayant pas de substituant à l'exception de -X¹-, -OY¹ et -OY², ou ayant comme substituant un groupe atomique choisi parmi -CₘH₂ₘ₊₁, -(CₘH₂ₘO)ₙCₚH₂ₚ₊₁, -CₘH₂ₘSCₚH₂ₚ₊₁, -CₘH₂ₘCOCₙH₂ₙ₊₁, -CₘH₂ₘCOOCₙH₂ₙ₊₁, -CₘH₂ₘOCOCₙH₂ₙ₊₁, -CₘH₂ₘS(=O)₂CₙH₂ₙ₊₁, CₘH₂ₘP(=O)(R)CₙH₂ₙ₊₁, -CₘH₂ₘP(=O)(R)OCₙH₂ₙ₊₁, -CₘH₂ₘOP(=O)(R)CₙH₂ₙ₊₁, -CₘH₂ₘOP(=O)(R)OCₙH₂ₙ₊₁, -CₘH₂ₘN(CₚH₂ₚ₊₁)(C_{q}H_{2q+1}), -CₘH₂ₘCON(CₚH₂ₚ₊₁)(C_{q}H_{2q+1}) et -CₘH₂ₘN(CₚH₂ₚ₊₁)COC_{q}H_{2q+1} (où m et n représentent chacun un nombre entier de 1 à 20, p et q représentent chacun un nombre de 0 à 20, et R représente un groupe alkyle ou alcoxy en C₁ à C₂₀ ou un groupe phényle ou phénoxy) et un groupe phényle,
Ar³ à Ar⁹, dans les formules générales (II) et (III), représentent un noyau benzénique n'ayant pas de substituant à l'exception de X² à X⁸ et -OY³ à -OY⁹, ou ayant comme substituant un groupe atomique choisi parmi -CₘH₂ₘ₊₁, -(CₘH₂ₘO)ₙCₚH₂ₚ₊₁, CₘH₂ₘSCₚH₂ₚ₊₁, -CₘH₂ₘCOCₙH₂ₙ₊₁, CₘH₂ₘCOOCₙH₂ₙ₊₁, -CₘH₂ₘOCOCₙH₂ₙ₊₁, -CₘH₂ₘS(=O)₂CₙH₂ₙ₊₁, CₘH₂ₘN(CₚH₂ₚ₊₁)(C_{q}H_{2q+1}), -CₘH₂ₘCON(CₚH₂ₚ₊₁)(C_{q}H_{2q+1}), -CₘH₂ₘN(CₚH₂ₚ₊₁)COC_{q}H_{2q+1}, -CₘH₂ₘPR¹R², -CₘH₂ₘP(=O)R¹R², -CₘH₂ₘOPR¹R², -CₘH₂ₘOP(=O)R¹R² (où m et n représentent chacun un nombre entier de 1 à 20, p et q représentent chacun un nombre entier de 0 à 20, et R¹ et R² représentent chacun un groupe alkyle ou alcoxy en C₁ à C₂₀ ou un groupe phényle ou phénoxy) et un groupe phényle.

6. Une composition de résine de polyoxyméthylène stabilisée selon la revendication 1, dans laquelle la composition de résine contient, de plus, au moins un membre du groupe formé par un composé phénolique ; un composé azoté ; un hydroxyde, un sel d'acide minéral et un sel d'acide carboxylique d'un métal alcalin ; et un hydroxyde, un sel d'acide minéral et un sel d'acide carboxylique d'un métal alcalino-terreux.
